# EUROPÄISCHE PATENTSCHRIFT

(11) **EP 3 529 054 B1**
(45) Veröffentlichungstag und Bekanntmachung des Hinweises auf die Patenterteilung: **24.01.2024**
(21) Anmeldenummer: 17787401.3
(22) Anmeldetag: 20.10.2017
(51) Int. Cl.: B29C 65/36, B29C 65/48, B29C 65/50, F16L 13/007, F16L 47/03, B29L 23/00

(54) **INDUKTIVES VERSCHWEISSEN VON KUNSTSTOFFROHREN MITTELS EINER SPULENANORDNUNG MIT MEHREREN EINZELSPULEN**
INDUCTIVE WELDING OF PLASTIC TUBES BY MEANS OF A COIL ARRANGEMENT WITH MULTIPLE INDIVIDUAL COILS
SOUDAGE PAR INDUCTION DE TUYAUX EN MATIÈRE PLASTIQUE AU MOYEN D'UN AGENCEMENT DE BOBINES COMPORTANT PLUSIEURS BOBINES

(30) Priorität: 20.10.2016 DE 102016120049
(43) Veröffentlichungstag der Anmeldung: 28.08.2019
(73) Patentinhaber: BRUGG Rohrsystem AG, 5314 Kleindöttingen (CH)
(72) Erfinder: RAMETSTEINER, Karl, 4040 Linz (AT); HUNZIKER, Urs, 8706 Meilen (CH)
(74) Vertreter: E. Blum & Co. AG
(86) Internationale Anmeldenummer: PCT/EP2017/076905
(87) Internationale Veröffentlichungsnummer: WO 2018/073436

(56) Entgegenhaltungen:
- WO-A1-92/15182
- WO-A1-97/23118
- JP-A- H06 281 079
- JP-A- H06 285 995
- JP-A- H07 276 502
- JP-A- H10 278 117
- JP-U- H0 436 799

## Beschreibung

### Technisches Gebiet

Die vorliegende Erfindung betrifft das technische Gebiet des thermischen Verbindens zweier Objekte aus Kunststoff mittels Induktionsschweißens. Die vorliegende Erfindung betrifft insbesondere ein System und ein Verfahren zum thermischen Verbinden (i) eines Rohres, welches ein erstes Kunststoffmaterial aufweist, mit (ii) einer Muffe, welche ein zweites Kunststoffmaterial aufweist und welche zumindest einen Abschnitt des Rohres umgibt, wobei sich zwischen dem Rohr und der Muffe und/oder integriert in dem Rohr und/oder der Muffe ein induktiv erhitzbares Aufheizmittel befindet.

### Hintergrund der Erfindung

Objekte aus Kunststoff können thermisch miteinander verbunden werden, indem ein elektrisch leitfähiges Material zwischen die beiden zu verbindenden Objekte eingebracht wird und dieses durch ein elektromagnetisches Wechselfeld erhitzt wird, welches von einem speziell ausgebildeten Generator erzeugt wird. Bei dem sog. Induktionsschweißen von Kunststoffobjekten erfolgt eine elektromagnetische Kopplung zwischen einem magnetischen und elektrisch leitfähigen Material und einem Induktionsgenerator im Wesentlichen über ein zeitlich veränderndes Magnetfeld, welches von einer Spule des Induktionsgenerators erzeugt wird.

Das Prinzip des Induktionsschweißens wird unter anderem beim thermischen Verbinden der Enden von zwei Kunststoffrohren mittels einer Kunststoffmuffe verwendet, welche über die beiden zu verschweißenden Enden geschoben wird. Ein magnetisches und elektrisch leitfähiges Aufheizmittel wird dabei zwischen die Kunststoffmuffe und die Mantelfläche von jeweils einem Endabschnitt der beiden zu verbindenden Rohre eingebracht und induktiv erhitzt, so dass die Außenseiten der beiden Endabschnitte sowie die Innenseite der Kunststoffmuffe aufgeschmolzen werden und bei einem nachfolgenden Abkühlen eine dauerhafte Schweißverbindung eingehen.

Eine Vorrichtung zum thermischen Verscheißen von Kunststoffrohren ist beispielsweise in WO 2012/137197 A2 offenbart. Ein System und ein Verfahren zum Verbinden eines Plastikrohrs mit einem anderen Plastikrohr, einem Sattel oder einem Dichtelement sind in WO92/15182 A1 offenbart.

Die meisten Induktionsschweißgeräte für Kunststoffrohre verwenden eine Spulenanordnung, welche während eines Schweißvorgangs um den (zylindrischen) Schweißbereich platziert wird und welche einen Stromfluss um den gesamten Bereich herum ermöglicht. Anschaulich ausgedrückt stellt die Spulenanordnung dann die Primärspule bzw. Primärwicklung eines Transformators dar, wobei das verwendete Aufheizmittel der Sekundärspule bzw. der Sekundärwicklung des Transformators entspricht. Dies gilt insbesondere dann, wenn sich das Aufheizmittel vollständig um das innere Kunststoffrohr herum erstreckt.

Ein technisches Problem beim Induktionsschweißen besteht jedoch bei zumindest manchen Anwendungen darin, dass das von der Primärspule erzeugte Induktionsmagnetfeld relativ weit in das Innere des Kunststoffrohres eindringt. Dadurch werden ungewollt auch metallische Strukturen induktiv erwärmt, die sich im Inneren des Kunststoffrohrs befinden. Solche innere Strukturen sind beispielsweise Stahlinnenrohre eines Kunststoffmantelrohres und/oder metallische (Diffusions-) Sperrschichten, beispielsweise Aluminiumfolien.

Anschaulich ausgedrückt bildet der gesamte Querschnitt des Kunststoffrohres und zusätzlich der äußere Bereich (bis hin zu der Primärspule) eine vom Induktionsfeld durchflossene Zone. Dies hat zur Folge, dass die Schweißqualität sehr stark von den Materialparametern der in dieser Zone vorhandenen (insbesondere ferromagnetischen oder wirbelstromabsorbierenden) Materialien mitbestimmt wird. Eine ungewollte Absorption von Energie von induktiv erhitzbaren Strukturen im Inneren des Kunststoffrohres kann nicht vermieden werden. In diesem Zusammenhang ist es offensichtlich, dass eine Absorption von Energie durch induktiv erhitzbare Strukturen, welche sich im Inneren des Kunststoffrohres befinden, sowohl die Qualität als auch die energetische Effizienz eines induktiven Schweißvorgangs reduzieren.

### Zusammenfassung der Erfindung

Der Erfindung liegt die Aufgabe zugrunde, das Induktionsschweißen hinsichtlich Qualität und Effizienz zu verbessern.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Im Rahmen der Erfindung wird beschrieben eine Aufheizvorrichtung zum thermischen Verbinden (i) eines Rohres, welches ein erstes Kunststoffmaterial aufweist, mit (ii) einer Muffe, welche ein zweites Kunststoffmaterial aufweist und welche zumindest einen Abschnitt des Rohres umgibt, wobei sich zwischen dem Rohr und der Muffe und/oder integriert in dem Rohr und/oder der Muffe ein induktiv erhitzbares Aufheizmittel befindet. Die beschriebene Aufheizvorrichtung weist eine Spulenanordnung auf, welche von einem Generator erregbar ist und welche aufweist eine erste Spule, welche innerhalb einer ersten Querschnittsfläche zumindest eine vollständige Windung aufweist, und eine zweite Spule, welche elektrisch mit der ersten Spule gekoppelt ist und welche innerhalb einer zweiten Querschnittsfläche zumindest eine vollständige Windung aufweist. Erfindungsgemäß ist die erste Querschnittsfläche unterschiedlich zu der zweiten Querschnittsfläche.

Der beschriebenen Aufheizvorrichtung liegt die Erkenntnis zugrunde, dass durch eine Aufteilung der Spulenanordnung in zumindest zwei einzelne Spulen ein induktiver Wechselwirkungsbereich bzw. eine induktive Wechselwirkungsfläche mit einer vorbestimmten und von dem jeweiligen konkreten Schweißvorgang abhängigen Größe auch dann bereitgestellt werden kann, wenn die einzelnen Spulen jeweils eine Querschnittsfläche aufweisen, die im Vergleich zu einer einzelnen Spule, welche einen ähnlich großen induktiven Wechselwirkungsbereich bereitstellt, deutlich kleiner ist. In diesem Zusammenhang ist es offensichtlich, dass sich bei einer Zylinderspule mit einem vergleichsweise kleinen Spulenquerschnitt die Magnetfeldlinien, welche an beiden axialen Seiten aus dem Spuleninneren heraustreten, zum Zwecke der von der Physik geforderten Bildung von geschlossenen Magnetfeldlinien stärker krümmen als bei einer Spule mit einem größeren Querschnitt. Aus dieser Betrachtung ergibt sich unmittelbar, dass bei einem induktiven Schweißvorgang, bei dem die Einzelspulen von außen an dem äußeren der beiden zu verschleißen Kunststoffobjekte anliegen, die magnetische bzw. induktive Eindringtiefe deutlich größer ist als wenn eine einzige Spule verwendet wird, welche einen vergleichsweise großen Spulenquerschnitts aufweist.

Eine geringe magnetische bzw. induktive Eindringtiefe ist insbesondere bei einem induktiven Verschweißen von Kunststoffrohren von Vorteil, welche nicht allzu weit entfernt von der Oberfläche im Inneren eine dünne Metallschicht aufweisen, welche nicht erhitzt werden sollte. In diesem Zusammenhang ist es auch von Bedeutung, dass sich eine solche Metallschicht typischerweise entlang der gesamten Längsrichtung des Kunststoffrohres erstreckt. Da in der Praxis die Spulenanordnung nie exakt über dem genannten induktiv erhitzbaren Aufheizmittel platziert werden kann, ist es erforderlich, das die Spulenanordnung entlang der Axialrichtung des zu verschweißenden Kunststoffrohres eine größere Längenausdehnung aufweist als das Aufheizmittel. Dies bedeutet, dass das von außen angelegte magnetische Wechselfeld eine größere räumliche Ausdehnung aufweist als das Aufheizmittel. Dies bedeutet jedoch, dass es zumindest im Bereich außerhalb des Aufheizmittels keine Abschirmung des magnetischen Wechselfeldes gibt, so dass eine geringe Eindringtiefe die einzige Möglichkeit ist, ein unerwünschtes Erhitzen einer solchen Metallschicht zu vermeiden. Gleiches gilt selbstverständlich auch für ein sog. Kunststoffmantelrohr, welches ein innenliegendes Metallrohr, beispielsweise aus Stahl, und optional eine thermische Isolierung zwischen dem innenliegenden Metallrohr und dem außenliegenden Kunststoffrohr aufweist.

Es wird darauf hingewiesen, dass sich auch durch einen geeigneten Aufbau bzw. eine geeignete Geometrie des Aufheizmittels die Feldlinien der einzelnen Spulen derart formen lassen, dass es in dem radialen Bereich zwischen dem Zentrum des Rohres und dem Aufheizmittel zu keiner oder nur zu einer minimalen Durchflutung mit Magnetfeldlinien kommt. Dies bedeutet, dass es beim Schweißvorgang zu keiner relevanten Erhitzung einer metallischen Folie oder eines inneren Metallrohres kommt. In diesem Zusammenhang kann es von Vorteil sein, wenn das Aufheizmittel aus fein verteilten ferromagnetischen Partikeln besteht, welche beispielsweise, insbesondere zum Zwecke eines Korrosionsschutzes, in einem (Kunststoff-) Matrixmaterial eingebettet sind und deren Konzentration im Randbereich des Aufheizmittels abfällt.

Die beschriebene elektrische Kopplung zwischen den beiden Spulen kann direkt oder indirekt erfolgen, eine direkte Kopplung kann beispielsweise durch eine gemeinsame elektrische Verschaltung der beiden Spulen erfolgen. Dabei ist es möglich, die gesamte Spulenanordnung mit lediglich zwei elektrischen Anschlussdrähten bzw. Anschlussleitungen zu bestromen. Eine indirekte Kopplung der beiden Spulen kann insbesondere über den genannten Generator erfolgen. Dafür sind zwar mehrere Anschlussdrähte erforderlich, es ist jedoch möglich, bei einer geeigneten Konfiguration des Generators die beiden Spulen unabhängig voneinander zu bestromen.

Der Ausdruck "innerhalb einer ersten bzw. zweiten Querschnittsfläche" kann in diesem Dokument insbesondere dahingehend verstanden werden, dass sich die zumindest eine vollständige Windung bei einer Projektion entlang der Längsachse Achse bzw. Symmetrieachse der betreffenden Spule in der betreffenden Querschnittsfläche abgebildet wird. Diese Definition kann insbesondere dann von Bedeutung sein, wenn die betreffende Spule mehrere (spiralförmige) Windungen und damit eine Längenausdehnung entlang ihrer Symmetrieachse aufweist.

Das Merkmal "wobei die erste Querschnittsfläche unterschiedlich ist zu der zweiten Querschnittsfläche" kann insbesondere ermöglichen, dass beim Betrieb der beschriebenen Aufheizvorrichtung die beiden Spulen entlang der Umfangsrichtung der Muffe an unterschiedlichen Stellen angeordnet werden. Dadurch kann die Muffe nicht nur punktuell sondern flächig mit dem Kunststoffrohr verschweißt werden.

Bevorzugt weisen die erste Querschnittsfläche und die zweite Querschnittsfläche eine Überlappung auf.

Dadurch kann auf vorteilhafte Weise die räumliche Homogenität des erzeugten Magnetfeldes erhöht und die Qualität einer induktiven Verschweißung verbessert werden.

Es wird darauf hingewiesen, dass es für eine hohe räumliche Homogenität nicht erforderlich ist, dass beide Spulen gleichzeitig erregt werden. Vielmehr ist es auch möglich, innerhalb eines ersten Zeitfensters die erste Spule und innerhalb eines zweiten Zeitfensters die zweite Spule zu erregen. Dabei können die beiden Zeitfenster völlig unterschiedlich sein oder alternativ einen zeitlichen Überlapp aufweisen.

Es wird weiter darauf hingewiesen, dass die beschriebene Überlappung nicht zwingend nötig ist: Bei genügen vielen kleinen Spulen ist die Eindringtiefe des Magnetfeldes nämlich derart klein, dass auch ohne Überlappung der Spulen durch genügend hohe Einstrahlungsenergie Inhomogenitäten des Magnetfelds kompensiert werden können, ohne eine störende größere Eindringtiefe zu bewirken.

Bevorzugt sind die beiden Spulen mechanisch miteinander verbunden. Dadurch kann die beschriebene Spulenanordnung auf einfache Weise an die Muffe angelegt bzw. um die Muffe herum platziert werden. Dies erleichtert die Handhabung der beschriebenen Aufheizvorrichtung.

Bevorzugt sind die beiden Spulen mechanisch flexibel miteinander verbunden sind und/oder weisen selbst zumindest eine gewisse Biegefähigkeit auf. Dies hat den Vorteil, dass die beschriebene Spulenanordnung abhängig von der Dimension der Muffe, insbesondere von dem Krümmungsradius der Muffe, mehr oder weniger stark gebogen werden kann. Dadurch kann die Aufheizvorrichtung für Schweißvorgänge mit verschieden großen Muffen verwendet werden.

Anschaulich ausgedrückt kann die Spulenanordnung durch eine geeignete Unterteilung und/oder eine geeignete Flexibilität der Spulen auf einfache Weise temporär um die Muffe herum angelegt werden kann.

Bevorzugt sind die beiden Spulen elektrisch derart miteinander gekoppelt, dass bei einer Erregung der Spulenanordnung ein von der ersten Spule erzeugtes erstes Magnetfeld antiparallel zu einem von der zweiten Spule erzeugten zweiten Magnetfeld ist. Dies hat den Vorteil, dass zumindest bei einer gleichzeitigen Erregung der beiden Spulen die Eindringtiefe in das Innere des Rohres besonders stark reduziert wird, weil die Magnetfeldlinien, welche von einer Spule erzeugt werden, durch die andere Spule räumlich kanalisiert bzw. in einem engen Raum gebündelt werden.

Es wird darauf hingewiesen, dass eine strenge Anti-Parallelität der beiden Magnetfelder lediglich dann gegeben ist, wenn die beiden Spulen in einer gemeinsamen Ebene oder zumindest hinsichtlich ihrer Querschnittsfläche parallel zueinander angeordnet sind. Auch bei einer leicht verkippten relativen räumlichen Anordnung der beiden Spulen, welche dann gegeben ist, wenn die Aufheizvorrichtung an den Außenumfang der Muffe angelegt wird, werden anschaulich ausgedrückt die Magnetfeldlinien, welche aus der ersten Spule in Richtung des Kunststoffrohres austreten, von der zweiten Spule "eingefangen", so dass die Eindringtiefe des Magnetfeldes in das Innere des Kunststoffrohres auf vorteilhafte Weise auf ein Minimum reduziert wird.

Die beiden beispielsweise in einem Array zusammengefügte Spulen werden bei dem hier beschriebenen Ausführungsbeispiel gegenpolig erregt. Dies führt, wie vorstehend beschrieben, zu einer Minimierung der Eindringtiefe des magnetischen Wechselfelds in das Innere des Rohres. Dies wiederum verhindert auf besonders effiziente Weise ein ungewolltes Aufheizen von tiefer liegenden ferromagnetischen oder wirbelstromfähigen Materialien.

Die erste Querschnittsfläche und/oder die zweite Querschnittsfläche können kleiner als 1 m², insbesondere kleiner als 1000 cm² und weiter insbesondere kleiner als 100 cm² sein.

Durch eine Aufteilung der zu erhitzenden Fläche auf mehrere kleinere Spulen kann die Wirkung bzw. das Eindringen des elektromagnetischen Wechselfelds in Richtung des Zentrums des zu verschweißenden Rohres auf einfache Weise reduziert werden. Dies führt, wie bereits vorstehend erläutert, auch im Falle eines Kunststoffmantelrohres mit einem Innenrohr, welches elektrisch leitende und/oder ferromagnetische Materialien enthält, zu einer nur sehr geringen unerwünschten Erwärmung des Innenrohres.

In Bezug auf geeignete Erregungsfrequenzen wird an dieser Stelle erwähnt, dass bei bekannten Spulenanordnungen mit einer vergleichsweise großen Spule die Gegenwart von massiven metallischen Strukturen im Inneren eines Kunststoffrohres und insbesondere ein Stahlinnenrohr eines Kunststoffmantelrohres zu einer hohen Induktivität der betreffenden Spulenanordnung führt. Dadurch wird ein Induktionsschweißen mit einer bekannten Spulenanordnung in der Praxis bereits mit mittleren Frequenzen im Bereich 10kHz und 400 kHz deutlich erschwert. Ein Induktionsschweißen mit höheren Frequenzen scheidet zumindest in der Praxis aus. Diese Einschränkung hinsichtlich von möglichen Erregungsfrequenzen wird mit der hier beschriebenen Aufheizvorrichtung überwunden, weil (a) aufgrund der beschriebenen geringe Eindringtiefe innere metallische Strukturen von dem elektromagnetischen Wechselfeld nicht oder nur mit extrem geringer Intensität erreicht werden und weil (b) kleine Einzelspulen bereits aus sich heraus eine vergleichsweise geringe Induktivität aufweisen. Mit der beschriebenen Aufheizvorrichtung können also abhängig von der jeweils konkreten Anwendung auch deutlich höhere Frequenzen als 400 kHz für die Erregung der Spulenanordnung verwendet werden.

Bevorzugt hat die erste Querschnittsfläche und/oder die zweite Querschnittsfläche (a) eine ovale Form und insbesondere kreisförmige Form, (b) eine dreieckige Form und insbesondere die eines rechtwinkligen Dreiecks oder (c) eine viereckige Form und insbesondere eine rechteckige Form und weiter insbesondere eine quadratische Form.

Die Liste von möglichen Formen ist nicht abschließend. Derzeit erscheinen jedoch insbesondere Formen geeignet, welche eine enge Aneinanderreihung benachbarter Spulen erlauben, so dass eine über die Fläche möglichst homogene magnetische Durchflutung erreichbar ist.

Bevorzugt weist die Aufheizvorrichtung ferner zumindest eine weitere Spule auf, welche innerhalb einer weiteren Querschnittsfläche zumindest eine vollständige Windung aufweist, wobei die weitere Querschnittsfläche unterschiedlich ist zu sowohl der ersten Querschnittsfläche als auch zu der zweiten Querschnittsfläche.

Durch eine Erhöhung der Anzahl an einzelnen Spulen kann ein räumlicher elektromagnetischer Wechselwirkungsbereich zwischen der beschriebenen Aufheizvorrichtung und einem Aufheizmittel erhöht werden. Die einzelnen Spulen können in einem eindimensionalen oder zweidimensionalen Array angeordnet sein. Die Spulenanordnung der Aufheizvorrichtung kann insbesondere eine Länge aufweisen, so dass diese um die gesamte Muffe herum gelegt und damit eine räumlich besonders homogene Verschweißung gewährleistet werden kann.

In diesem Zusammenhang wird darauf hingewiesen, dass die Breite der Spulenanordnung bzw. die Breite des zweidimensionalen Arrays entlang einer Richtung parallel zu der Achse des zu verschweißenden Rohres so groß sein sollte, dass das Aufheizmittel auch dann entlang seiner gesamten Breite erhitzt wird, wenn dieses entlang der axialen Richtung nicht mittig in Bezug zu der Spulenanordnung platziert ist.

Die weitere Spule kann die gleichen Merkmale aufweisen wie die erste Spule und/oder die zweite Spule.

Bevorzugt sind die Spulen seriell und/oder parallel elektrisch miteinander verschaltet. Dies hat den Vorteil, dass die Spulenanordnung über lediglich zwei Anschlussdrähte elektrisch erregt werden kann.

Durch eine geeignete Kombination aus einer oder mehreren Serienschaltung(en) und Parallelschaltung(en) kann die räumliche Charakteristik und insbesondere die räumlich gegebenenfalls variierende Intensität des elektromagnetischen Feldes auf einfache Weise an die jeweilige Schweißanwendung angepasst werden. Insbesondere kann, wie vorstehend bereits erwähnt, ein die Muffe bzw. das Rohr umgebendes elektromagnetisches Wechselfeld aufgebaut werden, dessen Eindringtiefe minimal ist. Anschaulich ausgedrückt wird die Eindringtiefe umso kleiner, je mehr Einzelspulen verwendet werden bzw. je kleiner die Einzelspulen sind (um dieselbe Grundfläche abzudecken).

Bevorzugt weist die Spulenanordnung ferner zumindest eine äußere Spule auf, welche oberhalb der ersten Spule und/oder oberhalb der zweiten Spule angeordnet ist, wobei insbesondere eine Querschnittfläche der äußeren Spule in einer Ebene parallel zu der Ebene der ersten Querschnittsfläche und/oder parallel zu der Ebene der zweiten Querschnittsfläche in Bezug zu der ersten Querschnittsfläche und/oder in Bezug zu der zweiten Querschnittsfläche versetzt ist. Dies hat den Vorteil, dass die Homogenität der durch die gesamte Spulenanordnung erzeugbaren elektromagnetischen Durchflutung weiter verbessert werden kann. Dies kann insbesondere zu einer gleichmäßigen Erwärmung des Aufheizmittel und damit zu qualitativ besonders guten Schweißverbindungen führen.

Auch an dieser Stelle wird darauf hingewiesen, dass es für eine qualitativ hochwertige Schweißverbindung nicht unbedingt erforderlich ist, dass die elektromagnetische Durchflutung über eine bestimmte Zeitspanne hinweg homogen ist. Vielmehr ist es auch möglich, unterschiedliche Spulen zu unterschiedlichen Zeiten zu erregen, so dass es über eine längere Zeitspanne hinweg integriert zu einer homogenen elektromagnetischen Durchflutung des Aufheizmittels kommt.

Bei bevorzugten Ausführungsformen werden (mindestens) zwei Spulenarrays räumlich zueinander versetzt übereinander gestapelt und zu unterschiedlichen Zeiten bestromt. So lassen sich die Übergangsbereiche (nicht durchflutete Inselbereiche) von einem eine Mehrzahl von Spulen aufweisenden Spulenarray zwischen den Spulen ebenfalls erwärmen. Eine nicht gleichzeitige Erregung der verschiedenen Spulenarrays bzw. Spulenebenen verhindert auf einfache Weise eine gegenseitige Beeinflussung der Spulenarrays und einer durch eine solche Beeinflussung möglichen Verzerrung der elektromagnetischen Felder.

Unter dem Ausdruck "oberhalb" kann insbesondere verstanden werden, dass sich die (zumindest eine) äußere Spule bei der Anwendung der Aufheizvorrichtung in radialer Richtung außerhalb der ersten Spule und/unter der zweiten Spule befindet.

Bevorzugt weist die Aufheizvorrichtung ferner ein kapazitives Element auf, welches zusammen mit der Spulenanordnung einen Schwingkreis bildet.

Durch eine Messung der Resonanzfrequenz des genannten Schwingkreises können auf einfache und effektive Weise bereits während eines induktiven Schweißvorgangs oder unmittelbar vor einem induktiven Schweißvorgang Rückschlüsse über die aktuelle Induktivität der Spulenanordnung gewonnen werden. Die elektrischen Eigenschaften eines Aufheizmittels wie z.B. die Fähigkeit Wirbelströme auszubilden und/oder die ferromagnetische Eigenschaften verändern nämlich die Induktivität der betreffenden Spule und damit der gesamten Spulenanordnung. Dadurch kann beispielsweise das korrekte Anlegen der Spulenanordnung um das Rohr herum überwacht werden.

Da die elektrischen und/oder magnetischen Eigenschaften des Aufheizmittels in der Regel temperaturabhängig sind, können durch die Messung der Resonanzfrequenz bzw. durch eine Messung einer Verschiebung der Resonanzfrequenz Rückschlüsse über die aktuelle Temperatur des Aufheizmittels bzw. das Erreichen einer vorbestimmten Temperatur des Aufheizmittels gewonnen werden. Die Resonanzfrequenz bzw. eine Verschiebung der Resonanzfrequenz kann von einer beliebigen Frequenzmesseinrichtung erfasst werden. Eine Frequenzmesseinrichtung kann beispielsweise in dem vorstehend genannten Generator integriert sein. Eine besonders signifikante Änderung der Resonanzfrequenz bei einer Temperaturänderung des Aufheizmittels kann gewährleistet werden, wenn das Aufheizmittel ein ferromagnetisches Material mit einer Curie-Temperatur aufweist, die zu Beginn eines induktiven Schweißvorgangs noch nicht erreicht ist, im Verlauf bzw. gegen Ende eines Schweißvorgangs jedoch zumindest annähernd erreicht wird. In Verbindung mit einem Aufheizmittel, welches ein Material mit einer für den jeweiligen Anwendungsfall geeigneten Curie-Temperatur aufweist, kann also eine hochempfindliche Temperatursteuerung des induktiven Schweißvorgangs realisiert werden.

In einer weiteren Ausführungsform wird die Veränderung der magnetischen Eigenschaften von nicht ferromagnetischen Materialien gemessen. Dabei sorgt ein Erreichen einer Neel-Temperatur dafür, dass insbesondere das Aufheizmittel gewisse magnetische Eigenschaften verliert. Auch dies kann durch eine Erfassung der Resonanzfrequenz überwacht und basierend darauf der induktive Schweißprozess auf geeignete Weise gesteuert werden.

Erfindungsgemäß wird beschrieben ein Aufheizsystem nach Anspruch 1.

Dem beschriebenen Aufheizsystem liegt die Erkenntnis zugrunde, dass durch eine von dem Generator veranlasste Bestromung der wie vorstehend beschriebenen Spulenanordnung ein induktiver Schweißvorgang durchgeführt werden kann, wobei der erforderliche elektromagnetische Wechselwirkungsbereich hinsichtlich seiner Tiefe, d.h. hinsichtlich seiner räumlichen Erstreckung senkrecht zu der jeweiligen Spulen-Querschnittsfläche, dahingehend begrenzt ist, dass einerseits das Aufheizmittel gut erhitzt wird und andererseits tieferliegende induktiv erhitzbare Strukturen nicht erhitzt werden. Dadurch kann eine besonders hohe Effizienz des Schweißprozesses gewährleistet werden und gleichzeitig eine unerwünschte thermische Beschädigung von ggf. innerhalb des Rohres vorhandenen metallische Strukturen verhindert werden.

Erfindungsgemäß wird beschrieben ein Verfahren nach Anspruch 10.

Dem beschriebenen Verfahren liegt die Erkenntnis zugrunde, dass durch die Verwendung der vorstehend beschriebenen Aufheizvorrichtung eine besonders hohe Effizienz des Schweißprozesses gewährleistet werden und gleichzeitig eine unerwünschte thermische Beschädigung von ggf. innerhalb des Rohres vorhandenen metallische Strukturen verhindert werden kann.

Das Erregen erfolgt typischerweise während einer vorbestimmten Zeitspanne, welche so lang ist, dass eine ausreichende Menge an Kunststoffmaterial von dem Rohr und/oder von der Muffe aufschmilzt, so dass es nach einem Abkühlen derselben zu einen stabilen mechanischen Verbindung zwischen Rohr und Muffe kommt. Um eine möglichst stabile mechanische Verbindung zu gewährleisten, kann ein Aufheizmittel verwendet werden, welches eine Vielzahl von Löchern aufweist, durch welche aufgeschmolzenes Kunststoffmaterial dringen kann, so dass in den Bereichen der Löcher eine direkte Verbindung zwischen Rohr und Muffe entsteht.

Eine direkte Schweißverbindung zwischen Rohr und Muffe kann auch durch ein Aufheizmittel erreicht werden, welches eine Vielzahl von induktiv erhitzbaren ferromagnetischen oder ferrimagnetischen Partikeln aufweist. Diese können in dem Rohr und/oder in der Muffe integriert sein. Alternativ oder in Kombination können diese Partikel auch innerhalb eines Kunststoffbandes integriert sein, welches sich zwischen dem Rohr und der Muffe befindet. Wenn in bevorzugter Weise der Kunststoff des Kunststoffbandes der gleiche ist wie der Kunststoff von Rohr und/oder Muffe, dann kann eine stofflich besonders homogene und damit stabile Schweißverbindung erzeugt werden.

Gemäß einem weiteren Ausführungsbeispiel der Erfindung weist das Verfahren ferner auf (a), vor dem Anlegen der Aufheizvorrichtung, ein axiales Zusammenführen des Rohres mit einem weiteren Rohr, so dass sich ein Ende des Rohres und ein Ende des weiteren Rohres stirnseitig gegenüberliegen; (b) ein Anlegen des Aufheizmittels zumindest teilweise umfänglich um das Ende des Rohres und das Ende des weiteren Rohres herum; und (c) ein Überstreifen der Muffe um das angelegte Aufheizmittel.

Das axiale Zusammenführen der beiden Rohre bzw. Rohrenden kann so erfolgen, dass die beiden Rohrenden aneinander anstoßen. Alternativ kann auch ein kleiner Abstand zwischen den beiden Rohrenden gegeben sein.

Das Überstreifen der Muffe kann bevorzugt so erfolgen, dass vor dem Zusammenführen der beiden Rohre die Muffe auf eines der beiden Rohre aufgeschoben wird und dass nach dem Zusammenführen die Muffe an die gewünschte (axiale) Position geschoben wird.

Gemäß einem weiteren Ausführungsbeispiel der Erfindung sind die beiden Rohre Fernwärmerohre, welche insbesondere ein äußeres Rohr aus Kunststoff und ein inneres Rohr aus Kunststoff oder Stahl aufweisen. Besonders bevorzugt befindet sich zwischen dem inneren Rohr und dem äußeren Rohr ein Wärme isolierendes Material. Optional kann das Fernwärmerohr auch noch eine Metalldiffusionssperre in Form einer Folie aufweisen, welche sich zwischen dem inneren Stahlrohr und dem äußeren Kunststoffrohr befindet.

Gemäß einem weiteren Ausführungsbeispiel der Erfindung ist die Spulenanordnung elektrisch derart ausgebildet und/oder die Spulen der Spulenanordnung werden derart erregt, dass entlang des vollumfänglichen Umfangsverlaufs um die Muffe ein Stromfluss vollständig um die Muffe herum unterbunden ist. Durch eine gezielte Unterbrechung des Stromflusses entlang der Umfangsrichtung kann auf einfache Weise verhindert werden, dass sich in der Spulenanordnung zusätzlich zu der ersten, zu der zweiten und ggf. auch zusätzlich zu der zumindest einen weiteren Spule eine größere Spule ausbildet, welche eine elektromagnetische Strahlung erzeugt, die eine vergleichsweise große Eindringtiefe in das Innere des Rohres hat und damit den Vorteil der geringen Eindringtiefe der von den einzelnen Spulen erzeugten elektromagnetischen Strahlung reduziert.

Ein Unterbinden bzw. ein Unterbrechen eines Stromflusses vollständig um die Muffe herum kann beispielsweise dadurch erreicht werden, dass es in der Spulenanordnung keine Windung oder sonstige elektrische Leitung gibt, welche vollständig um die gesamte Muffe herum verläuft. Durch eine geeignete räumliche Verteilung der einzelnen Spulen (nicht vollständig) um die Muffe herum kann der von dem induktiven Wechselfeld durchströmte Bereich optimal auf die für die Schweißung zu erhitzende Zone konzentriert werden.

Bevorzugt weist das Aufheizmittel eine bandartige Struktur mit einem Aufheizhilfsmaterial auf, welches induktiv erhitzbar ist, wobei das Aufheizhilfsmaterial entlang des Umfangsverlaufs räumlich derart verteilt oder angeordnet ist, dass entlang des vollumfänglichen Umfangsverlaufs um das Rohr herum eine elektrische Leitfähigkeit an zumindest einer Stelle unterbrochen ist.

Durch eine gezielte Unterbrechung des Stromflusses entlang der Umfangsrichtung kann auf einfache Weise verhindert werden, dass sich um das Rohr herum eine Kurzschlusswicklung ergibt, welche bei einem Induktionsschweißvorgang zu einem induzierten Stromfluss um das gesamte Rohr herum führen würde. Bei einem geschlossenen bzw. ununterbrochen leitfähigen Aufheizmittel resultiert ein solcher induzierter Stromfluss aus dem Prinzip eines Transformators, wobei eine Spule des Induktionsgenerators die Primärspule des Transformators und das ununterbrochen leitfähige Aufheizmittel die Sekundärspule des Transformators darstellt.

In diesem Zusammenhang wurde erkannt, dass ein gerichteter Strom, welcher nur bei einem ununterbrochen leitfähigen Aufheizmittel auftritt, zu einer Asymmetrie des gesamten Stromflusses führt, welche wiederum zu einer ungleichmäßigen Erwärmung des Aufheizmittels führt. Eine Asymmetrie (der Richtung) des für die Erwärmung verantwortlichen Stromflusses in dem Aufheizmittel resultiert im Falle eines geschlossen leitfähigen Aufheizbandes aus der Tatsache, dass sich bei einer induktiven Erregung des Aufheizbandes grundsätzlich zwei Arten von Strömen ausbilden. Eine erste Art ist der Strom, welcher aufgrund der Eigenschaft das Ausheizmittels als eine Transformator-Sekundärwicklung um das gesamte innere Rohr herum fließt und welcher in diesem Dokument auch als Kurzschlussstrom bezeichnet wird. Der Kurzschlussstrom fließt ausschließlich oder zumindest stark bevorzugt in Umfangsrichtung. Die zweite Art von Strom sind sog. Wirbelströme, die sich beim Induktionsschweißen in bekannter Weise in dem Aufheizmittel als ein elektrischer Leiter aufgrund des sich zeitlich ändernden erregenden Magnetfeldes ausbilden, welches wiederum von der Spulenanordnung generiert wird. Die Wirbelströme haben in aller Regel keine besonderen Vorzugsrichtungen und führen demzufolge zu einer besonders homogenen induktiven Wärmeentwicklung. Durch das Unterbinden von Kurzschlussströmen wird also genau derjenige Teil des für die Erwärmung verantwortlichen Stromes unterbunden, welcher asymmetrisch in Bezug auf die Stromrichtung ist. Dadurch wird insgesamt die Homogenität der Erwärmung verbessert und bei einem Schweißvorgang können lokale Überhitzungen in dem zu verflüssigenden Kunststoff auf einfache und effektive Weise vermieden werden.

Die durch den Umfangsverlauf an jedem Punkt des Aufheizmittels definierte Umfangsrichtung wird in diesem Dokument auch als Tangentialrichtung bezeichnet. Eine Richtung senkrecht zu der Umfangsrichtung bzw. zu der Vielzahl an Tangentialrichtungen wird in diesem Dokument als Längsrichtung oder als Axialrichtung bezeichnet.

Anschaulich ausgedrückt wird durch zumindest einen elektrischen Unterbruch des Aufheizmittels sichergestellt, dass das Aufheizmittel selbst keine vollständige Sekundärwicklung um das Rohr herum bildet. Dadurch werden Kurzschlussströme unterbunden und die Aufheizung bzw. Erwärmung des Aufheizmittels erfolgt ausschließlich basierend auf induktiv erzeugten Wirbelströmen. Dadurch können beim Schweißvorgang lokale Überhitzungen in einzelnen Hotspots vermieden werden. Außerdem wird die Montage des Aufheizmittels bzw. das Anlegen des Aufheizmittels um das Rohr herum vereinfacht und die gesamte Handhabung eines induktiven Schweißvorgangs vereinfacht.

Bevorzugt weist das Aufheizmittel ein ferromagnetisches Material auf, welches induktiv erhitzbar ist und welches eine Curie-Temperatur hat, die geringer ist als 460°C, insbesondere geringer als 400°C, weiter insbesondere geringer als 300°C und noch weiter insbesondere geringer als 250°C.

Durch das Verwenden eines ferromagnetischen Materials mit einer in Bezug zu dem Material der beiden zu verbindenden Objekte geeigneten Curie-Temperatur ergibt sich bei einem Schweißvorgang eine automatische Temperaturbegrenzung. Ein stabiler selbstgesteuerter Schweißvorgang wird gewährleistet durch eine Curie-Temperatur, welche auf der einen Seite ausreichend hoch ist, um das Kunststoffmaterial von Rohr und/oder Muffe aufzuschmelzen, und welche auf der anderen Seite nicht so hoch ist, dass das Kunststoffmaterial auf eine Temperatur gebracht wird, welche zu einer thermischen Zerstörung führt. Eine solche thermische Zerstörung kann beispielsweise dadurch gegeben sein, dass das Kunststoffmaterial soweit aufschmilzt, dass sich seine Form während des thermischen Verbindungsvorgangs nicht unerheblich verändert. Insbesondere sollte das ferromagnetische Material eine Curie-Temperatur haben, welche, sofern diese Curie-Temperatur bei einem thermischen Verbindungsvorgang auch erreicht wird, innerhalb einer typischen für einen thermischen Verbindungsvorgang benötigten Zeitdauer, lediglich zu einer Aufschmelzung einer Oberflächenschicht von dem Kunststoffmaterial führt.

Unter dem Begriff "Material" kann in diesem Dokument sowohl ein "einheitliches" Material mit einer einheitlichen "Curie-Temperatur" als auch ein Materialbestandteil oder mehrere Materialbestandteile einer Zusammensetzung von verschiedenen Materialien verstanden werden. Insbesondere kann sich der Begriff "Material" zumindest auf einen einzelnen Stoff (z.B. zumindest ein Legierungsbestandteil) oder auf eine Materialzusammensetzung (z.B. Legierung) beziehen.

Es wird darauf hingewiesen, dass die in diesem Dokument beschriebene Aufheizung zum Teil durch magnetische Verluste und zum Teil durch elektrische Verluste bewirkt wird. Unter magnetische Verluste werden in diesem Zusammenhang sog. Ummagnetisierungsverluste am Aufheizmittel verstanden, welche mit der ferromagnetischen Magnetisierbarkeit des Aufheizmittels zusammenhängen und auch als Hystereseverluste bezeichnet werden können. Die elektrischen Verluste sind insbesondere ohmsche Verluste in Verbindung mit induzierten Strömen, insbesondere Wirbelströmen, die bei der induktiven Wechselwirkung des Aufheizmittels mit einem von einem entsprechenden Generator erzeugten elektromagnetischen Feld erzeugt werden.

Bei Erreichen der Curie-Temperatur des Aufheizmittels fallen die Ummagnetisierungsverluste weg und die Einkopplung von elektromagnetischer Energie in das Aufheizmittel ist entsprechend reduziert, weil nur noch die elektrischen Verluste zu einer (weiteren) Erwärmung des Aufheizmittels beitragen. Je nach konkreter Ausgestaltung des Aufheizmittels kann dieses Wegfallen des durch Ummagnetisierungsverluste bewirkten Energieeintrags bereits zu einer Temperaturbegrenzung ausreichen. Ggf. kann eine entsprechende Reduktion der Einkopplung von Energie auch von dem Generator oder von einer Frequenzmesseinrichtung erkannt werden, welche die Resonanzfrequenz eines Schwingkreises (wie vorstehend beschrieben) erfasst.

Eine Curie-Temperatur deutlich über dem Schmelzpunkt der beteiligten Kunststoffmaterialien trägt zu einer schnellen Aufheizung beim Schweißprozess bei und verhilft damit zu einer Arbeitszeitverkürzung für den Schweißprozess. Bei einer relativ hohen Curie-Temperatur muss das Aufheizmittel in Bezug auf Wärmeableitung, Wärmekapazität und Aufheizgeschwindigkeit dahingehend optimiert werden, dass die sich im Aufheizmittel schnell akkumulierende Energie derart an das Kunststoffmaterial abgeleitet werden kann, dass dieser nicht beschädigt wird. Wie nachfolgend im Detail beschrieben, lässt sich durch die Verwendung von Materialien mit verschiedenen Curie-Temperaturen der makroskopisch in Erscheinung tretende Übergangsbereich des Verlusts der ferromagnetischen Eigenschaften spreizen bzw. verschieben und so die Funktion der Temperaturbegrenzung zusätzlich gestalten

Unterschiedliche Curie-Temperaturen eines mehrere ferromagnetische Materialien aufweisenden Aufheizmittels haben den Vorteil, dass durch eine geeignete Mischung der Mengenverhältnisse (Massen- oder Volumenverhältnisse) der unterschiedlichen ferromagnetischen Materialien eine für die jeweilige Anwendung optimale mittlere Curie-Temperatur eingestellt werden kann. Die beschriebenen unterschiedlichen ferromagnetischen Materialien können auch dazu führen, dass dem Aufheizmittel zumindest zwei verschiedene Curie-Temperaturen zugeordnet sind. Dies bedeutet in der Praxis, dass zu Beginn einer Schweißvorgangs, wenn die Temperatur des Aufheizmittels und des umgebenden Kunststoffmaterials noch relativ gering ist, beide Materialien zu einem induktiven Heizen mit einer vergleichsweise hohen Heizleistung beitragen. Wenn die Temperatur später einen Wert erreicht, der über der Curie-Temperatur desjenigen Materials liegt, welches die geringere Curie-Temperatur hat, dann wird der Heizvorgang nur noch mit einer vergleichsweise geringen Heizleistung stattfinden. Dies ermöglicht auf vorteilhafte Weise eine besonders genaue automatische Kontrolle des thermischen Verbindens der beiden Objekte Rohr und Muffe.

Ein Aufheizmittel mit unterschiedlichen (ferromagnetischen) Materialien kann einfach mittels eines schichtweisen Aufbaus von unterschiedlichen Materialien realisiert werden. Alternativ oder in Kombination zu unterschiedlichen Curie-Temperaturen können diese Materialien eine unterschiedliche Härte, eine unterschiedliche Elastizität und/oder eine unterschiedliche Duktilität aufweisen.

Durch eine geeignete Einstellung der Mengenverhältnisse der unterschiedlichen Materialien ist es somit möglich, die mechanischen Streckeigenschaften des Aufheizmittels so zu modifizieren, dass sich beim Verstecken gezielt Verformungen ergeben, welche zu einer Verbesserung, das heißt zu einer erhöhten mechanischen Festigkeit, der erzeugten Schweißverbindung beitragen. Nach derzeitiger Erkenntnis eignet sich für den beschriebenen schichtweisen Aufbau insbesondere eine Kombination aus zwei oder mehr Schichten der folgenden metallischen Legierungen: Cu-Al, Fe-Cu, Fe-Edelstahl, CU-Sn, Fe-Al, Al-Mg. Um für die jeweilige Anwendung optimale mechanische Streckeigenschaften zu erzielen, ist es auch möglich, innerhalb einer Legierung die Verhältnisse zwischen den an der Legierung beteiligten Metallen anzupassen.

Um den Einfluss verschiedener Elastizitäten auf die Qualität und insbesondere auf die Festigkeit einer Schweißverbindung zu untersuchen, wurden von den Erfindern eine Reihe von Experimenten durchgeführt. Dabei hat sich gezeigt, dass durch gezieltes Einstellen der Längselastizität des Aufheizmittels Struktur eine deutliche Verbesserung des Schweißergebnisses erreicht werden kann. Dabei ist die Längselastizität die Elastizität des Aufheizmittels entlang seiner länglichen Erstreckung, welche entlang der Oberfläche des inneren Rohres wirkt. Anschaulich ausgedrückt ist diese längliche Erstreckung die tangentiale Richtung entlang der zylindrischen Mantelfläche des Rohres.

Bevorzugt werden die erste Spule und die zweite Spule zeitlich versetzt zueinander erregt. Dies kann insbesondere von Vorteil sein, wenn sich die beiden Spulen, wie vorstehend in Bezug auf bevorzugte Ausführungsbeispiele beschrieben, teilweise überlappen. Dadurch kann zwischen den beiden Spulen die gegenseitige magnetische Beeinflussung reduziert werden. Auch dies kann zu einer Reduzierung der magnetischen Eindringtiefe beitragen.

Im Falle von (deutlich) mehr als zwei einzelne Spulen können diese auch zu zwei oder mehr Gruppen zusammengeschaltet und/oder angesteuert werden, was gerade bei sich überlappenden Einzelspulen erlaubt, die gegenseitige Beeinflussung zu minimieren und gleichzeitig die Randzonen der Übergänge zwischen verschiedenen Spulen dennoch genügend gleichmäßig zu erhitzen.

Bevorzugt wird die Spulenanordnung mit einer Frequenz zwischen 100 Hz und 10 Mhz, bevorzugt zwischen 1 kHz und 1 Mhz und besonders bevorzugt zwischen 20 khz und 300 kHz erregt.

Wie bereits vorstehend erläutert, werden erfindungsgemäß mehrere vergleichsweise kleinen Spulen verwendet, um einen flächenmäßig relativ großen räumlichen Bereich mit elektromagnetischer Strahlung zu durchfluten. Aufgrund der vergleichsweise kleinen Induktivität der Spulen können im Vergleich zu bekannten Aufheizvorrichtungen Erregungsfrequenzen in einem breiten Frequenzbereich verwendet werden. Damit ist es möglich, für verschiedene Anwendungen und insbesondere für verschiedene Aufheizmittel jeweils eine geeignete Erregungsfrequenz zu verwenden.

Erfindungsgemäß weist das Verfahren ferner auf ein Anlegen einer Spannvorrichtung von außen an die Muffe, so dass diese mit einem entlang ihres Außenumfangs zumindest annähernd konstanten Druck beaufschlagt wird. Dies bedeutet, dass der räumliche Bereich, in welchem das induktive Schweißen stattfindet, unter Druck gesetzt wird. Insbesondere wenn sich Kunststoffmaterial an der Innenseite der äußeren Muffe verflüssigt, wird dieser Druck auch an die Außenseite des inneren Rohres weitergegeben. Dadurch können besonders stabile Verschweißungen realisiert werden.

Bevorzugt wird die Spannvorrichtung vor dem Anlegen der Aufheizvorrichtung direkt um die Muffe herum gelegt. Auch ein gemeinsames Anlegen von Spannvorrichtung und Aufheizvorrichtung ist möglich, sofern die Spannvorrichtung in der Aufheizvorrichtung integriert ist. Beides bedeutet, dass die Aufheizvorrichtung nicht direkt sondern nur indirekt an die Muffe angelegt wird. Alternativ kann die Spannvorrichtung auch von außen an die Aufheizvorrichtung angelegt werden. Auch in diesem Fall ist es möglich, dass insbesondere zum Zwecke einer einfachen Handhabung die Spannvorrichtung in der Aufheizvorrichtung integriert ist.

Die Spannvorrichtung kann beispielsweise ein Band, z.B. aus Teflon, sein, welches von außen um die Muffe herumgewickelt wird. Auch Spannbänder mit einem Spannhebel oder einer Spannratsche können verwendet werden.

Da es sich bei den hier beschriebenen zu verschweißenden Objekten um symmetrische zylinderförmige Außenhüllen von Rohren handelt, reicht eine weiter innenliegende noch nicht aufgeweichte Kunststoffschicht, um den von außen applizierten zusätzlichen Druck vollständig abzufangen. Dies ist insbesondere im Falle von untenliegenden metallischen Diffusionssperrschichten von hoher Wichtigkeit. Falls diese nämlich durch Streufelder dennoch erhitzt würden, würde sich hier die druckunterstützte Verschweißung bevorzugt in der Außenzone ausbilden und weiter innen keine Veränderungen bewirken.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Bevor bezugnehmend auf die Zeichnung exemplarische Ausführungsbeispiele der Erfindung beschrieben werden, werden im Weiteren einige technische Überlegungen im Zusammenhang mit der Erfindung dargestellt.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

### Kurze Beschreibung der Zeichnung

- Figur 1: zeigt ein Aufheizsystem aufweisend (a) eine Aufheizvorrichtung mit einer Spulenanordnung und (b) einen Induktionsgenerator zum selektiven und gezielten Erregen von einzelnen Spulen der Spulenanordnung um ein inneres Rohr induktive mit einer äußeren Muffe zu verschweißen.
- Figur 2: zeigt ein Aufheizsystem aufweisend (a) eine Aufheizvorrichtung mit einer offenen bzw. unterbrochenen Spulenanordnung und (b) einen Induktionsgenerator zum Erregen von einzelnen Spulen der Spulenanordnung, so dass ein offenes bzw. unterbrochenes Aufheizmittel, welches sich außerhalb eines inneren Rohres und innerhalb einer äußeren Muffe befindet, induktiv erhitzt wird.
- Figur 3: zeigt eine Spulenanordnung mit mehreren in Reihe geschalteten Spulen.
- Figur 4: zeigt eine Aufheizvorrichtung, welche die Spulenanordnung aus Figur 3 sowie einen parallel zu der Spulenanordnung geschalteten Kondensator aufweist.
- Figur 5: zeigt eine Aufheizvorrichtung mit einer Spulenanordnung, bei der in Serie geschaltete und gemeinsam erregte Spulen zueinander antiparallele Magnetfelder erzeugen.
- Figur 6: zeigt eine Spulenanordnung mit mehreren in Reihe geschalteten und sich räumlich überlappenden Spulen.
- Figur 7: zeigt eine Spulenanordnung mit zwei übereinander liegenden Lagen von Spulen, wobei die beiden Lagen so zueinander orientiert sind, dass die oberen Spulen gegenüber den unteren Spulen versetzt sind.
- Figur 8: illustriert ein induktives Verschweißen von zwei axial aneinander angrenzenden Rohrabschnitten innerhalb einer Muffe.
- Figur 9a: zeigt in einer Draufsicht ein Aufheizmittel mit einer Mehrzahl von Öffnungen, die in einer bandartigen Struktur unregelmäßig angeordnet sind.
- Figur 9b: zeigt in einer Draufsicht ein Aufheizmittel, welches ein elektrisch isolierendes Matrixmaterial und darin eingebettete ferromagnetische Partikel aufweist.
- Figur 9c: zeigt in einer Seitenansicht ein Aufheizmittel mit einer bandartigen Struktur, welches ein Matrixmaterial mit eingebetteten ferromagnetischen Partikeln und zwei als Trägerfolien ausgebildete flexible Trägerelemente aufweist.
- Figur 9d: zeigt in einer Seitenansicht ein Aufheizmittel, welches mehrere ferromagnetische Schichten aufweist, die jeweils eine unterschiedliche Curie-Temperatur haben.

### Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit Bezugszeichen versehen sind, welche in den letzten beiden Ziffern identisch sind mit den Bezugszeichen von entsprechenden gleichen oder zumindest funktionsgleichen Merkmalen bzw. Komponenten. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

Außerdem wird darauf hingewiesen, dass raumbezogene Begriffe, wie beispielsweise "vorne" und "hinten", "oben" und "unten", "links" und "rechts", etc. verwendet werden, um die Beziehung eines Elements zu einem anderen Element oder zu anderen Elementen zu beschreiben, wie in den Figuren veranschaulicht. Demnach können die raumbezogenen Begriffe für Ausrichtungen gelten, welche sich von den Ausrichtungen unterscheiden, die in den Figuren dargestellt sind. Es versteht sich jedoch von selbst, dass sich alle solchen raumbezogenen Begriffe der Einfachheit der Beschreibung halber auf die in den Zeichnungen dargestellten Ausrichtungen beziehen und nicht unbedingt einschränkend sind, da die jeweils dargestellte Vorrichtung, Komponente etc., wenn sie in Verwendung ist, Ausrichtungen annehmen kann, die von den in der Zeichnung dargestellten Ausrichtungen verschieden sein können.

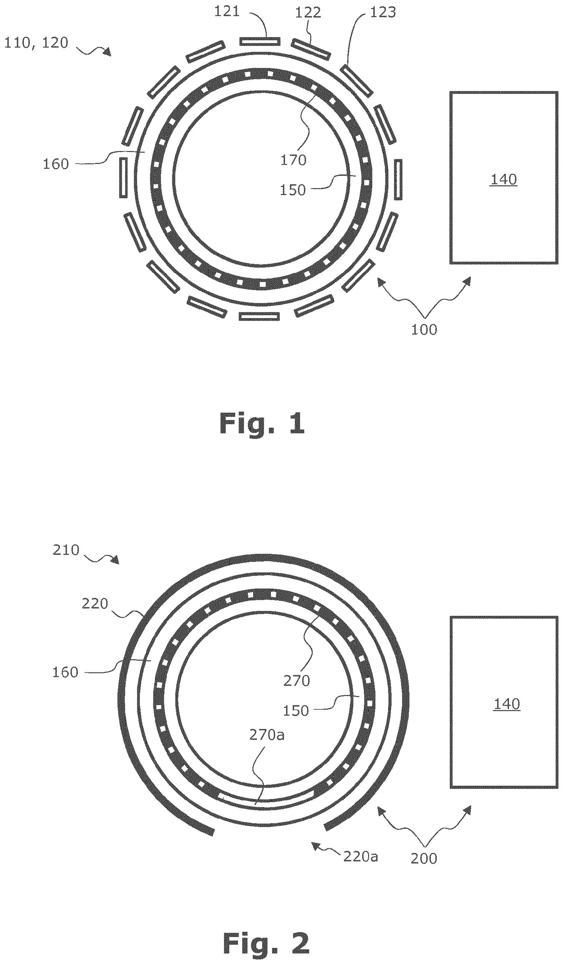

**Figur 1** zeigt in einer Querschnittsansicht ein Aufheizsystem 100 zum induktiven thermischen Verbinden bzw. Verschweißen von einem inneren Rohr 150, welches ein erstes Kunststoffmaterial aufweist, mit einer äußeren Muffe 160, welche ein zweites Kunststoffmaterial aufweist und welche zumindest einen Abschnitt des Rohres 150 umgibt. Zwischen dem Rohr 150 und der Muffe 160 befindet ein induktiv erhitzbares Aufheizmittel 170.

Das Aufheizsystem 100 umfasst eine Aufheizvorrichtung 110 mit einer Spulenanordnung 120 und mit einem Induktionsgenerator 140, welcher in diesem Dokument auch einfach als Generator 140 bezeichnet wird. Die Spulenanordnung 120 weist eine Mehrzahl von einzelnen Spulen auf, eine erste Spule 121, eine zweite Spule 122 und mehrere weitere Spulen 123. Der Generator 140 ist mit der Spulenanordnung 120 elektrisch gekoppelt und derart eingerichtet, dass die Spulenanordnung 120 mit einem elektrischen Wechselstrom erregt werden kann.

Die einzelnen Spulen haben im Vergleich zu Spulen von bekannten Aufheizvorrichtungen einen relativ kleinen Querschnitt. Aufgrund des vergleichsweise kleinen Spulenquerschnitts können sich die Magnetfeldlinien, welche an beiden axialen Seiten aus dem jeweiligen Spuleninneren heraustreten bzw. in das jeweilige Spuleninnere hineintreten, zum Zwecke der von der Physik geforderten Bildung von geschlossenen Magnetfeldlinien stärker krümmen als bei einer Spule mit einem größeren Querschnitt. Damit ergibt sich im Vergleich zu Spulen mit größeren Spulenquerschnitten eine besonders kleine magnetische Eindringtiefe in das Innere des Kunststoffrohres 150. Deshalb können mit dem beschriebenen Aufheizsystem 100 auch Rohre verschweißt werden, welche im Inneren eines Kunststoffmantels induktiv erhitzbare Komponenten wie beispielsweise ein metallisches Innenrohr aufweisen. Ähnliches gilt für metallische Folien, welche in als Fernwärmerohre verwendete Kunststoffmantelrohren für eine Diffusionssperre verwendet werden.

Die einzelnen Spulen können in Serie oder parallel zueinander geschaltet sein. Auch eine Kombination von Serien- und Parallelschaltung(en) ist möglich. Außerdem kann zumindest eine einzelne Spule unabhängig von den anderen Spulen individuell erregt werden. In diesem Fall weist der Generator 140 zumindest zwei Paare von Ausgangsanschlüssen auf, welche unterschiedlichen Spulen zugeordnet sind. Der Generator 140 kann dann eingerichtet sein, verschiedene Spulen zeitlich versetzt zueinander zu erregen bzw. zu bestromen.

Wie aus Figur 1 ersichtlich, ist gemäß dem hier dargestellten Ausführungsbeispiel das Aufheizmittel 170 vollständig um das Rohr 150 herum gewickelt, so dass sich zwischen den beiden Enden des Aufheizmittels 170 ein nicht dargestellter Überlapp ergibt. Demzufolge kann das Aufheizmittel 170 als eine kurzgeschlossene Sekundärspule eines Transformators angesehen werden, dessen Primärspule die Spulenanordnung 120 darstellt. Aufgrund dieser kurzgeschlossene Sekundärspule kann in dem Aufheizmittel 170 ein Stromfluss mit einer Vorzugsrichtung entstehen, welche um das Außenumfang des Rohres 150 herum verläuft. Selbst wenn aufgrund der induktiven Erregung in dem Aufheizmittel 170 Wirbelströme erzeugt werden, welche zumindest im zeitlichen Mittel keine Vorzugsrichtung haben und damit für eine räumlich gleichmäßige induktive Erwärmung sorgen, führt ein Stromfluss entlang bzw. in der kurz geschlossenen Sekundärspule zumindest zu einer gewissen Asymmetrie (der Richtung) des für die induktive Erwärmung verantwortlichen Stromflusses und damit für eine nicht ganz gleichmäßige Erhitzung des Aufheizmittels 170.

Anschaulich und ausführlich ausgedrückt kann diese Asymmetrie wie folgt beschrieben werden: Bei einer induktiven Erregung eines geschlossen (leitfähigen) Aufheizmittels bilden sich grundsätzlich zwei Arten von Strömen aus. Eine erste Art ist der Strom, welcher aufgrund der Eigenschaft des Ausheizmittels als eine Trafo-Sekundärwicklung um das gesamte Rohr 150 herum fließt und welcher in diesem Dokument auch als Kurzschlussstrom bezeichnet wird. Der Kurzschlussstrom fließt ausschließlich oder zumindest stark bevorzugt in Umfangs- bzw. Tangentialrichtung. Die zweite Art von Strom sind sog. Wirbelströme, welche sich beim Induktionsschweißen in bekannter Weise in dem Aufheizmittel als ein elektrischer Leiter aufgrund des sich zeitlich ändernden erregenden Magnetfeldes erzeugt werden, welches wiederum von der Spule des Induktionsgenerators 140 generiert wird. Die Wirbelströme haben in aller Regel keine besonderen Vorzugsrichtungen und führen demzufolge zu einer besonders homogenen induktiven Wärmeentwicklung. Durch das Unterbinden von Kurzschlussströmen wird also genau derjenige Teil des für die Erwärmung verantwortlichen Stromes unterbunden, welcher asymmetrisch in Bezug auf die Stromrichtung ist. Dadurch wird insgesamt die Homogenität der Erwärmung verbessert und bei einem Schweißvorgang können lokale Überhitzungen in dem zu verflüssigenden Kunststoff auf einfache und effektive Weise vermieden werden.

In diesem Zusammenhang wird darauf hingewiesen, dass die in diesem Dokument beschriebene Aufheizung zum Teil durch magnetische Verluste und zum Teil durch elektrische Verluste bewirkt werden kann. Unter "magnetische Verluste" werden sog. Ummagnetisierungsverluste am Aufheizmittel verstanden, welche mit der ferromagnetischen und/oder ferrimagnetischen Magnetisierbarkeit des Aufheizmittels zusammenhängen und auch als Hystereseverluste bezeichnet werden können. Die "elektrischen Verluste" sind insbesondere ohmsche Verluste in Verbindung mit den genannten Wirbelströmen, die bei der induktiven Wechselwirkung des Aufheizmittels mit einem von einem entsprechenden Generator erzeugten elektromagnetischen Feld erzeugt werden.

Um insbesondere zum Zwecke einer räumlich gleichmäßigen induktiven Erhitzung des Aufheizmittels 170 die vorstehend beschriebenen sekundärseitigen Kurzschlussströme zu unterbinden, ist gemäß dem hier dargestellten Ausführungsbeispiel das Aufheizmittel 170 kein durchgehend elektrisch leitfähiges Material. Vielmehr besteht das Aufheizmittel aus einem nicht leitfähigen Matrixmaterial, bevorzugt aus einem Kunststoff, in welches ferromagnetische Partikel elektrisch voneinander isoliert eingebettet sind.

**Figur 2** zeigt in einer Querschnittsansicht ein Aufheizsystem 200 welches eine Aufheizvorrichtung 210 und einen Generator 140 aufweist. Die Aufheizvorrichtung 210 umfasst eine Spulenanordnung 220, welche eine Mehrzahl von nicht explizit dargestellten einzelnen Spulen aufweist. Gemäß dem hier dargestellten Ausführungsbeispiel erstreckt sich entlang der Umfangsrichtung der Muffe 160 die Spulenanordnung 220 nicht vollständig um die Muffe 160 herum. Anders ausgedrückt weist die Spulenanordnung 220 eine Unterbrechung 220a auf. Gleiches gilt für ein Aufheizmittel 270, welches (i) ein durchgehend elektrisch leitfähiges und insbesondere ferromagnetisches Material aufweist, welches (ii) sich zwischen dem Rohr 150 und der Muffe 160 befindet und welches (iii) eine Unterbrechung 270a aufweist. Dadurch wird auf einfache und effektive Weise ein Kurzschlussstrom um das gesamte Rohr 150 herum unterbunden. Um trotz den beiden Unterbrechungen 220a und 270a eine effiziente induktive Erhitzung des Aufheizmittel 270 zu gewährleisten, überlappen die beiden Unterbrechungen 220a und 270a entlang der Umfangsrichtung von Rohr 150 bzw. Muffe 160.

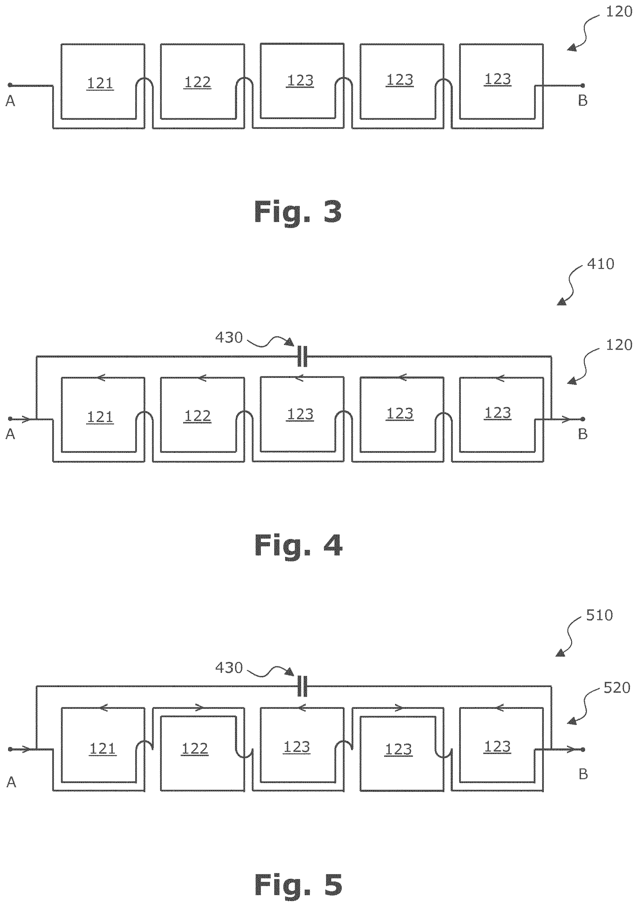

**Figur 3** zeigt eine Spulenanordnung 120 mit mehreren in Reihe geschalteten Spulen, einer ersten Spule 121, einer zweiten Spule 122 sowie mehreren (hier drei) weiteren Spulen 123. Die dargestellte lineare Anordnung der Spulen 121, 122, 123 erstreckt sich zwischen zwei Anschlusskontakten A und B. Aufgrund der reinen Serienschaltung werden durch ein einziges Erregungssignal, welches an den beiden Anschlusskontakten A und B angelegt wird, gleichzeitig alle Spulen 121, 122, 123 erregt.

Es wird darauf hingewiesen, dass die zweidimensionale Darstellung von Figur 3 die Spulenanordnung 120, welche im Betrieb um eine Muffe herum angeordnet ist bzw. an der zylindrischen Außenfläche der Muffe anliegt, in einem quasi von der Muffe abgerollten geometrischen Zustand zeigt.

Gemäß dem hier dargestellten Ausführungsbeispiel weist jede Spule 121, 122, 123 einen zumindest annähernd quadratischen Querschnitt auf. Um eine lineare Anordnung der elektrisch in Reihe bzw. Serie geschalteten Spulen 121, 122, 123 zu realisieren, weist bei dem hier dargestellten Ausführungsbeispiel jede eine natürliche Anzahl N von Windungen plus eine halbe Windung auf (N+1/2 Windungen) auf. Aus Gründen der Übersichtlichkeit ist in Figur 3 jeweils lediglich eine vollständige Windung dargestellt. Abhängig von der jeweiligen Anwendung können mehrere, beispielsweise mindestens zwei, mindestens fünf oder mindestens zehn vollständige Windungen vorgesehen sein. In diesem Zusammenhang ist jedoch zu beachten, dass mit steigender Anzahl an vollständigen Windungen die Induktivität der jeweiligen Einzelspule ansteigt, so dass in der Praxis die Erregungsfrequenz für die betreffende Einzelspulen nach oben hin begrenzt ist.

Es wird darauf hingewiesen, dass anstelle von quadratischen oder rechteckigen Einzelspulen auch einzelne Spulen verwendet werden können, welche einen anderen Querschnitt aufweisen. Insbesondere Spulen mit einem ovalen oder sogar kreisförmigen Querschnitt erscheinen derzeit geeignet, um zum einen eine effiziente induktive Kopplung zu dem jeweiligen Aufheizmittel und zum anderen eine geringe Eindringtiefe der erzeugten elektromagnetischer Strahlung zu erreichen.

**Figur 4** zeigt eine Aufheizvorrichtung 410, welche die Spulenanordnung 120 aus Figur 3 sowie einen parallel zu der Spulenanordnung 120 geschalteten Kondensator 430 aufweist. Die Spulenanordnung 120 und der Kondensator 430 bilden einen elektromagnetischen Schwingkreis, dessen Resonanzfrequenz die aktuelle Induktivität der Spulenanordnung 120 widerspiegelt. Daher können, unter der als in sehr guter Näherung gültigen Prämisse einer konstanten und bekannten Kapazität des Kondensators 430, durch eine Messung der Resonanzfrequenz des genannten Schwingkreises bereits während eines induktiven Schweißvorgangs oder unmittelbar vor einem induktiven Schweißvorgang Rückschlüsse über die aktuelle Induktivität der Spulenanordnung 120 gewonnen werden.

Die elektrischen Eigenschaften des sich in der Nähe der Spulenanordnung 120 befindlichen Aufheizmittels wie z.B. die Fähigkeit Wirbelströme auszubilden und/oder dessen ferromagnetische Eigenschaften verändern nämlich die Induktivität der einzelnen Spulen und damit der gesamten Spulenanordnung 120. Dadurch kann beispielsweise das korrekte Anlegen der Spulenanordnung 120 um die Muffe herum überwacht werden.

Wie bereits vorstehend erwähnt, können durch eine Messung einer Verschiebung der Resonanzfrequenz auch Rückschlüsse über die aktuelle Temperatur des Aufheizmittels bzw. das Erreichen einer vorbestimmten Temperatur des Aufheizmittels gewonnen werden. Dies gilt insbesondere bei einer Temperaturänderung eines ferromagnetischen Aufheizmittels bis hin zu seiner Curie-Temperatur, die zu Beginn eines induktiven Schweißvorgangs noch nicht erreicht ist, im Verlauf bzw. gegen Ende eines Schweißvorgangs jedoch zumindest annähernd erreicht wird.

**Figur 5** zeigt eine Aufheizvorrichtung 510 mit einer Spulenanordnung 520, bei der im Unterschied zu der in Figur 4 dargestellten Spulenanordnung 120, zueinander unterschiedliche Wicklungsrichtungen auf. Dadurch ergeben sich unterschiedliche Stromrichtungen, die in ausgewählten Leiterabschnitten jeweils durch eine Pfeilspitze dargestellt sind. Die unterschiedlichen Wicklungsrichtungen haben zur Folge, dass die in Serie geschalteten und gemeinsam erregten Spulen zueinander antiparallele Magnetfelder erzeugen. Dadurch kann die Eindringtiefe von elektromagnetischer Strahlung in das Innere eines Rohres besonders stark reduziert werden, weil die Magnetfeldlinien, welche von einer Spule erzeugt werden, durch die andere Spule räumlich kanalisiert bzw. in einem engen Raum (zurück)gebündelt werden.

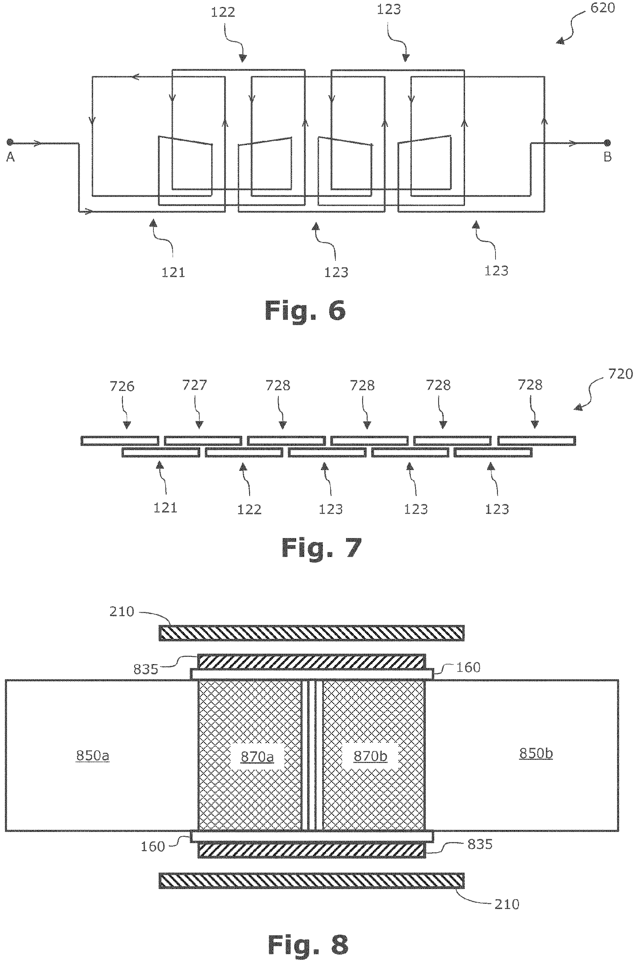

**Figur 6** zeigt eine Spulenanordnung 620 mit mehreren in Reihe geschalteten und sich räumlich überlappenden Einzelspulen 121, 122, 123. Dadurch kann auf vorteilhafte Weise eine Inhomogenität des erzeugten Magnetfeldes (zwischen benachbarten nicht überlappenden Spulen ist die Magnetfeldstärke geringer) reduziert werden.

**Figur 7** zeigt eine Spulenanordnung 720 mit zwei übereinander liegenden Lagen von Spulen. Eine in Figur 7 untere Spulenlage weist die Spulen 121, 122 und 123 auf. Die in Figur 7 obere Spulenlage weist eine erste äußere Spule 726, eine zweite äußere Spule 727 sowie eine weitere äußere Spule 728 auf. Wie aus Figur 7 ersichtlich, sind die beiden Lagen so zueinander orientiert, dass die oberen Spulen 726, 727, 728 gegenüber den unteren Spulen 121, 122, 123 versetzt. Dadurch ergibt sich, wie bei der Ausführungsform von Figur 6, ein räumlicher Überlapp zwischen zwei benachbarten und unterschiedlichen Spulenlagen zugeordneten Einzelspulen, welcher zu einer deutlichen Verbesserung der Homogenität des erzeugten Magnetfeldes führt.

**Figur 8** illustriert in einer schematischen Draufsicht ein induktives Verschweißen von zwei axial aneinander angrenzenden Rohrabschnitten innerhalb einer Muffe. Gemäß dem hier dargestellten Ausführungsbeispiel sind die beiden betreffenden Rohre sog. Fernwärmerohre, nämlich ein erstes Fernwärmerohr 850a und ein zweites Fernwärmerohr 850b. Die beiden Fernwärmerohre 850a und 850b weisen jeweils ein inneres metallisches Kernrohr sowie ein äußeres Kunststoffrohr auf, wobei sich zwischen dem inneren Kernrohr und dem äußeren Kunststoffrohr ein geeignetes thermisches Isoliermaterial befindet.

Wie aus Figur 8 ersichtlich, befinden sich innerhalb einer Muffe 160 zwei Aufheizmittel, ein erstes Aufheizmittel 870a und ein zweites Aufheizmittel 870b. Das erste Aufheizmittel 870a ist um das zu verschweißende Ende des ersten Fernwärmerohres 850a herumgelegt bzw. an diesem angelegt. Das zweite Aufheizmittel 870b ist um das zu verschweißende Ende des zweiten Fernwärmerohres 850b herumgewickelt bzw. an diesem angelegt. Die Aufheizmittel 870a, 870b können bevorzugt um die Rohre 850a, 850b herum stofflich geschlossene und elektrisch unterbrochene Strukturen sein, welche ein Matrixmaterial und darin eingebettet elektrisch voneinander isolierte ferromagnetisch Partikel aufweisen. Alternativ können die Aufheizmittel 870a, 870b sowohl stofflich als auch elektrisch unterbrochene Strukturen sein, welche nachfolgend noch genauer beschrieben sind. Auch Kombinationen von stofflich geschlossenen Strukturen und stofflich unterbrochenen Strukturen können verwendet werden.

Die Qualität der Verschweißung der beiden Kunststoff-Fernwärmerohre 850a und 850b kann dadurch verbessert werden, dass die Muffe 160 entlang ihres Außenumfangs mit einem zumindest annähernd konstanten Druck beaufschlagt wird. Deshalb ist zwischen der Aufheizvorrichtung 210 und der Muffe 160 eine mechanische Spannvorrichtung 835 vorgesehen, mittels welcher ein entsprechender Druck von außen erzeugt wird.

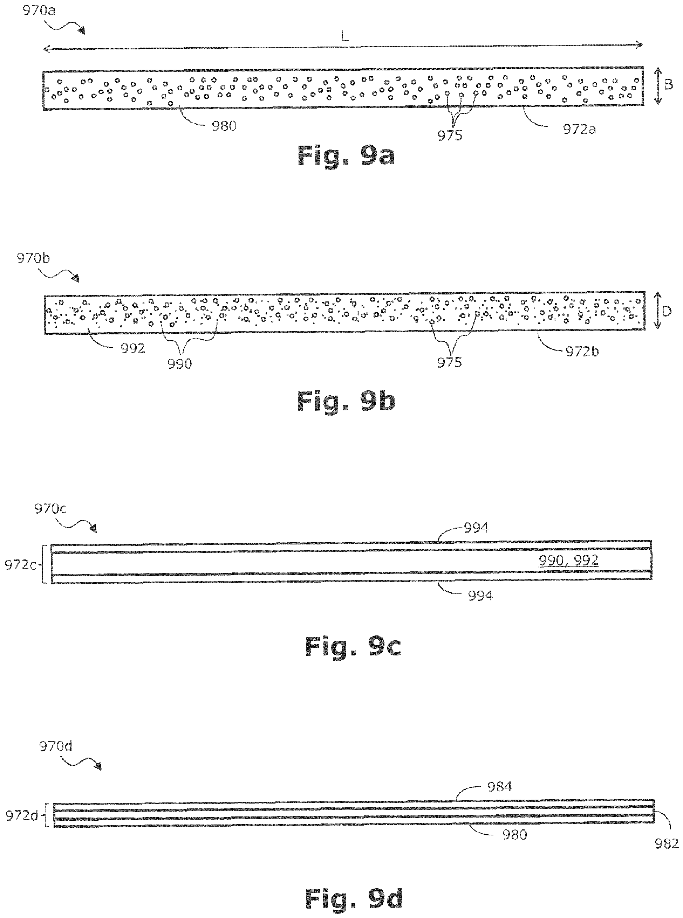

**Figur 9a** zeigt in einer Draufsicht ein Aufheizmittel 970a, welches eine bandartige Struktur 972 umfasst, in der eine Vielzahl von Öffnungen 975 ausgebildet sind. Gemäß dem hier dargestellten Ausführungsbeispiel sind die Öffnungen 975 in einer räumlich unregelmäßigen Weise angeordnet. Allerdings ist auch eine regelmäßige räumliche Anordnung möglich. Die Öffnungen 975 können beispielsweise mittels Stanzens und/oder einem Schlitzen und nachträglichem Strecken des Materials erzeugt werden. Die Öffnungen 975 ermöglichen bei einem Schweißvorgang ein Durchfließen von aufgeschmolzen Kunststoffmaterial durch die bandartige Struktur 972. Daraus ergibt sich nach einem Verfestigen eine stoffliche Verbindung der Kunststoffmaterialien von Rohr und Muffe, was wiederum zu einer verbesserten Festigkeit der Schweißverbindung führt.

Bei bevorzugten Ausführungsbeispielen liegt eine Länge L der bandartigen Struktur 972 in einem Bereich von 40mm bis 3200mm und insbesondere im Bereich von 60mm bis 800mm. Ein typisches Verhältnis zwischen der Länge L und einer Breite B der bandartigen Struktur 972 ist kleiner als 1:10, insbesondere kleiner als 1:100.

**Figur 9b** zeigt in einer Draufsicht ein Aufheizmittel 970b, welches ein elektrisch isolierendes Matrixmaterial 992 und darin eingebettete ferromagnetische Partikel 990 aufweist. Gemäß dem hier dargestellten Ausführungsbeispiel besteht das Matrixmaterial aus Polyethylen (PE) oder weist dieses zumindest auf. Die Partikel 990 können eine mittlere Größe mit einem Durchmesser von weniger als 1 mm, insbesondere weniger als 0,1 mm und weiter insbesondere weniger als 0,01 mm haben. Gemäß dem hier dargestellten Ausführungsbeispiel sind die Partikel sind Ferrite.

Die vergleichsweise kleinen ferromagnetischen Partikel 990 haben den Vorteil, dass für eine induktive Erwärmung sehr hohe Frequenzen verwendet werden können. In diesem Zusammenhang ist es von großer Bedeutung, dass die Eindringtiefe der elektromagnetischen Strahlung in das Innere des betreffenden Rohres mit steigender Frequenz abnimmt.

Der Vorteil der Möglichkeit der Verwendung von hohen Frequenzen kann insbesondere durch die vorstehend beschriebene Zusammensetzung der Spulenanordnung durch eine Mehrzahl von vergleichsweise kleinen Einzelspulen ausgenutzt werden, um das für eine induktive Erwärmung erforderliche elektromagnetische Feld zu erzeugen.

**Figur 9c** zeigt in einer Seitenansicht ein Aufheizmittel 970c mit einer bandartigen Struktur 972c, welches ein Matrixmaterial 992 mit eingebetteten ferromagnetischen Partikeln 990 und zwei als Trägerfolien ausgebildete flexible Trägerelemente 994 aufweist. Das Matrixmaterial 992 befindet sich zwischen den beiden Trägerfolien 994. Die Trägerelemente 994 können mit einem Klebstoff versehene Folien sein, an welchem das Matrixmaterial 992 anhaftet. Eine solche schichtweise Struktur des Aufheizmittels 970c ermöglicht eine besonders einfache Handhabung.

Gemäß dem hier dargestellten Ausführungsbeispiel hat das schichtweise aufgebaute Aufheizmittel 970c eine Dicke D von 0,5 µm. Es können jedoch auch andere Dicken von 0,1 mm bis 3 mm, insbesondere von 0,2 mm bis 2 mm und weiter insbesondere von 0,3 mm bis 1 mm verwendet werden.

**Figur 9d** zeigt in einer Seitenansicht ein Aufheizmittel 970d, welches mehrere ferromagnetische Schichten aufweist, die jeweils eine unterschiedliche Curie-Temperatur haben. Gemäß dem hier dargestellten Ausführungsbeispiel weist eine bandartige Struktur 972d des Aufheizmittels 970d mehrere (hier drei) Schichten aus jeweils einem unterschiedlichen ferromagnetischen Material auf. Eine erste Schicht weist ein (erstes) ferromagnetisches Material 980 mit einer ersten Curie-Temperatur auf. Eine zweite Schicht weist ein zweites bzw. weiteres ferromagnetisches Material 982 mit einer zweiten Curie-Temperatur auf. Die dritte Schicht weist ein drittes bzw. weiteres ferromagnetisches Material 984 mit einer dritten Curie-Temperatur auf. Gemäß dem hier dargestellten Ausführungsbeispiel sind die drei Curie-Temperaturen unterschiedlich. Damit kann sich eine mittlere Curie-Temperatur des Aufheizmittels 970d ergeben, welche durch eine geeignete Wahl der drei ferromagnetischen Materialien auf die jeweilige spezifische Schweißanwendung angepasst werden kann.

In anderen Ausführungsformen stellt sich keine gemeinsame mittlere Curie-Temperatur ein, so dass ein induktiver Energieeintrag auf das Aufheizmittel 970d nach einem Erreichen der niedrigeren Curie-Temperatur reduziert aber nicht vollständig unterbunden wird. In der Folge wird sich bei gleicher induktiver Erregung eine langsamere Temperaturerhöhung ergeben, wobei mit dem Erreichen der jeweils nächst höheren Curie-Temperatur eine induktive Kopplung zwischen einer Erregerspule und dem Aufheizmittel 970d reduziert wird.

Bei bevorzugten Ausführungsformen liegt eine Dicke D des Aufheizmittels 970d in einem Bereich zwischen 0,1mm und 5mm, und insbesondere im Bereich zwischen 0,5mm und 3mm. Diese Dimensionen gelten auch für eine bandartige Struktur, welches lediglich aus einer Schicht von einem ferromagnetischen Material besteht.

Es wird darauf hingewiesen, dass geschichtete Aufheizmittel auch 2, 4 oder mehr Schichten haben können.

Es wird ferner darauf hingewiesen, dass das Aufheizmittel 970d an seinen flächigen Seiten, d.h. in Figur 9d an der oberen Oberfläche und/oder an der unteren Oberfläche, eine Oberflächenrauigkeit aufweisen kann. Es solches Oberflächengenauigkeit basiert auf Erhöhungen und Vertiefungen, welche zueinander einen mittleren Höhenunterschied aufweisen. Bei bevorzugten Ausführungsformen ist dieser mittlere Höhenunterschied größer als 10µm. Eine Oberflächenrauigkeit kann auch bei den anderen in diesem Dokument beschriebenen Aufheizmitteln zu verbesserten Schweißergebnissen führen.

Es sollte angemerkt werden, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

### BEZUGSZEICHEN:

- 100: Aufheizsystem
- 110: Aufheizvorrichtung
- 120: Spulenanordnung
- 121: erste Spule
- 122: zweite Spule
- 123: weitere Spule
- 140: Generator
- 150: Rohr
- 160: Muffe
- 170: Aufheizmittel

- 200: Aufheizsystem
- 210: Aufheizvorrichtung
- 220: Spulenanordnung
- 220a: Unterbrechung
- 270: Aufheizmittel
- 270a: Unterbrechung

- A, B: Anschlüsse

- 410: Aufheizvorrichtung
- 430: Kondensator

- 510: Aufheizvorrichtung
- 520: Spulenanordnung

- 620: Spulenanordnung
- 720: Spulenanordnung
- 726: erste äußere Spule
- 727: zweite äußere Spule
- 728: weitere äußere Spule

- 835: Spannvorrichtung
- 850a: erstes (Fernwärme)Rohr
- 850b: zweites (Fernwärme)Rohr
- 870a: erstes Aufheizmittel
- 870b: zweites Aufheizmittel

- 970a/b: Aufheizmittel
- 970c/d: Aufheizmittel
- 972c/d: bandartige Struktur
- 975: Öffnungen
- 980: ferromagnetisches Material
- 982: weiteres ferromagnetisches Material
- 984: weiteres ferromagnetisches Material
- 990: Partikel / Ferrite
- 992: Matrixmaterial
- 994: Trägerelement / Trägerfolie
- L: Länge
- B: Breite

## Patentansprüche

1. Aufheizsystem (100) zum thermischen Verbinden eines Rohres (150), welches ein erstes Kunststoffmaterial aufweist, mit einer Muffe (160), welche ein zweites Kunststoffmaterial aufweist und welche zumindest einen Abschnitt des Rohres (150) umgibt, wobei sich zwischen dem Rohr (150) und der Muffe (160) und/oder integriert in dem Rohr (150) und/oder der Muffe (160) ein induktiv erhitzbares Aufheizmittel (170) befindet, das Aufheizsystem (100) aufweisend
die Muffe (160) und
eine Aufheizvorrichtung (110) mit einer Spulenanordnung (120), welche von einem Generator (140) erregbar ist, den Generator (140) und eine Spannvorrichtung (835),
wobei die Spulenanordnung (120) aufweist
eine erste Spule (121), welche innerhalb einer ersten Querschnittsfläche zumindest eine vollständige Windung aufweist, und
eine zweite Spule (122), welche elektrisch mit der ersten Spule (121) gekoppelt ist und welche innerhalb einer zweiten Querschnittsfläche zumindest eine vollständige Windung aufweist, wobei die erste Querschnittsfläche unterschiedlich ist zu der zweiten Querschnittsfläche;
**dadurch gekennzeichnet** das
die Spannvorrichtung (835) konfiguriert ist, von außen an die Muffe (160) angelegt zu werden, so dass diese mit einem entlang ihres Außenumfangs zumindest annähernd
konstanten Druck beaufschlagt wird.

2. Aufheizsystem (100) gemäß dem vorangehenden Anspruch, wobei die erste Querschnittsfläche und die zweite Querschnittsfläche eine Überlappung aufweisen.

3. Aufheizsystem (100) gemäß einem der vorangehenden Ansprüche, wobei die beiden Spulen (121, 122) mechanisch miteinander verbunden sind, wobei insbesondere
die beiden Spulen (121, 122) mechanisch flexibel miteinander verbunden sind und/oder selbst zumindest eine gewisse Biegefähigkeit aufweisen.

4. Aufheizsystem (100) gemäß einem der vorangehenden Ansprüche, wobei die beiden Spulen (121, 122) elektrisch derart miteinander gekoppelt sind, dass bei einer Erregung der Spulenanordnung (520) ein von der ersten Spule (121) erzeugtes erstes Magnetfeld antiparallel zu einem von der zweiten Spule (122) erzeugten zweiten Magnetfeld ist.

5. Aufheizsystem (100) gemäß einem der vorangehenden Ansprüche, wobei die erste Querschnittsfläche und/oder die zweite Querschnittsfläche kleiner ist als 1 m², insbesondere kleiner als 1000 cm² und weiter insbesondere kleiner als 100 cm², und/oder wobei
die erste Querschnittsfläche und/oder die zweite Querschnittsfläche
eine ovale Form und insbesondere kreisförmige Form,
eine dreieckige Form und insbesondere die eines rechtwinkligen Dreiecks oder
eine viereckige Form und insbesondere eine rechteckige Form und weiter insbesondere eine quadratische Form
aufweisen.

6. Aufheizsystem (100) gemäß einem der vorangehenden Ansprüche, ferner aufweisend
zumindest eine weitere Spule (123), welche innerhalb einer weiteren Querschnittsfläche zumindest eine vollständige Windung aufweist, wobei die weitere Querschnittsfläche unterschiedlich ist zu sowohl der ersten Querschnittsfläche als auch zu der zweiten Querschnittsfläche.

7. Aufheizsystem (100) gemäß einem der vorangehenden Ansprüche, wobei die Spulen (121, 122, 123) seriell und/oder parallel elektrisch miteinander verschaltet sind.

8. Aufheizsystem (100) gemäß einem der vorangehenden Ansprüche, wobei die Spulenanordnung (720) ferner aufweist
zumindest eine äußere Spule (726), welche oberhalb der ersten Spule (121) und/oder oberhalb der zweiten Spule (122) angeordnet ist, wobei insbesondere
eine Querschnittfläche der äußeren Spule (726) in einer Ebene parallel zu der Ebene der ersten Querschnittsfläche und/oder parallel zu der Ebene der zweiten Querschnittsfläche in Bezug zu der ersten Querschnittsfläche und/oder in Bezug zu der zweiten Querschnittsfläche versetzt ist.

9. Aufheizsystem (100) gemäß einem der vorangehenden Ansprüche, wobei die Aufheizvorrichtung (410) ferner aufweist ein kapazitives Element (430), welches zusammen mit der Spulenanordnung (120) einen Schwingkreis bildet.

10. Verfahren zum thermischen Verbinden eines Rohres (150), welches ein erstes Kunststoffmaterial aufweist, mit einer Muffe (160), welche ein zweites Kunststoffmaterial aufweist und welche zumindest einen Abschnitt des Rohres (150) umgibt, wobei sich zwischen dem Rohr (150) und der Muffe (160) und/oder integriert in dem Rohr (150) und/oder der Muffe (160) ein induktiv erhitzbares Aufheizmittel (170, 870a) befindet, das Verfahren aufweisend
Anlegen einer Aufheizvorrichtung (110) von außen an die Muffe (160), welche Aufheizvorrichtung (110) eine Spulenanordnung (120) aufweist, welche von einem Generator (140) erregbar ist, wobei die Spulenanordnung (120) aufweist eine erste Spule (121), welche innerhalb einer ersten Querschnittsfläche zumindest eine vollständige Windung aufweist, und eine zweite Spule (122), welche elektrisch mit der ersten Spule (121) gekoppelt ist und welche innerhalb einer zweiten Querschnittsfläche zumindest eine vollständige Windung aufweist, wobei die erste Querschnittsfläche unterschiedlich ist zu der zweiten Querschnittsfläche;
Anlegen einer Spannvorrichtung (835) von außen an die Muffe (160), so dass diese mit einem entlang ihres Außenumfangs zumindest annähernd konstanten Druck beaufschlagt wird;
Erregen der Spulenanordnung (120); und
Entfernen der Aufheizvorrichtung (110) von der Muffe (160).

11. Verfahren gemäß dem vorangehenden Anspruch, ferner aufweisend, vor dem Anlegen der Aufheizvorrichtung (110),
axiales Zusammenführen des Rohres (850a) mit einem weiteren Rohr (850b), so dass sich ein Ende des Rohres (850a) und ein Ende des weiteren Rohres (850b) stirnseitig gegenüberliegen;
Anlegen des Aufheizmittels (870a, 870b) zumindest teilweise umfänglich um das Ende des Rohres (870a) und das Ende des weiteren Rohres (870b) herum; und
Überstreifen der Muffe (160) um das angelegte Aufheizmittel (870a, 870b); wobei insbesondere
die beiden Rohre Fernwärmerohre (850a, 850b) sind, welche insbesondere aufweisen
ein äußeres Rohr aus Kunststoff und ein inneres Rohr aus Kunststoff oder Stahl.

12. Verfahren gemäß dem vorangehenden Anspruch, wobei
die Spulenanordnung (120) elektrisch derart ausgebildet ist und/oder die Spulen der Spulenanordnung (120) derart erregt werden, dass entlang des vollumfänglichen Umfangsverlaufs um die Muffe (160) ein Stromfluss vollständig um die Muffe (160) herum unterbunden ist, und/oder wobei das Aufheizmittel (970c) eine bandartige Struktur (972c) mit einem Aufheizhilfsmaterial (990) aufweist, welches induktiv erhitzbar ist, wobei das Aufheizhilfsmaterial (990) entlang des Umfangsverlaufs räumlich derart verteilt oder angeordnet ist, dass entlang des vollumfänglichen Umfangsverlaufs um das Rohr (150) herum eine elektrische Leitfähigkeit an zumindest einer Stelle unterbrochen ist.

13. Verfahren gemäß einem der drei vorangehenden Ansprüche, wobei das Aufheizmittel ein ferromagnetisches Material (980) aufweist, welches induktiv erhitzbar ist und welches eine Curie-Temperatur hat, die geringer ist als 460°C, insbesondere geringer als 400°C, weiter insbesondere geringer als 300°C und noch weiter insbesondere geringer als 250°C.

14. Verfahren gemäß einem der vier vorangehenden Ansprüche, wobei die erste Spule (121) und die zweite Spule (122) zeitlich versetzt zueinander erregt werden.

15. Verfahren gemäß einem der fünf vorangehenden Ansprüche, wobei die Spulenanordnung (120) mit einer Frequenz zwischen 100 Hz und 10 Mhz, bevorzugt zwischen 1 kHz und 1 Mhz und besonders bevorzugt zwischen 20 khz und 300 kHz erregt wird.

## Claims

1. Heating system (100) for thermally connecting a pipe (150), which has a first plastic material, to a sleeve (160), which has a second plastic material and which surrounds at least a section of the pipe (150), wherein an inductively heatable heating medium (170) is located between the pipe (150) and the sleeve (160) and/or integrated in the pipe (150) and/or the sleeve (160), wherein the heating system (100) comprises
the sleeve (160) and
a heating device (110) with a coil arrangement (120) which can be energized by a generator (140), the generator (140) and a clamping device (835),
wherein the coil arrangement (120) comprises
a first coil (121) having at least one complete winding within a first cross-sectional area, and
a second coil (122) which is electrically coupled to the first coil (121) and which has at least one complete winding within a second cross-sectional area, wherein the first cross-sectional area is different from the second cross-sectional area;
**characterized in that**
the clamping device (835) is configured to be applied to the sleeve (160) from the outside, so that the sleeve is subjected to an at least approximately constant pressure along its outer circumference.

2. Heating system (100) according to the preceding claim, wherein the first cross-sectional area and the second cross-sectional area have an overlap.

3. Heating system (100) according to one of the preceding claims, wherein the two coils (121, 122) are mechanically connected to each other, in particular wherein
the two coils (121, 122) are mechanically flexibly connected to each other and/or themselves have at least a certain bending capacity.

4. Heating system (100) according to one of the preceding claims, wherein the two coils (121, 122) are electrically coupled to one another in such a way that, when the coil arrangement (520) is energized, a first magnetic field generated by the first coil (121) is antiparallel to a second magnetic field generated by the second coil (122).

5. Heating system (100) according to one of the preceding claims, wherein the first cross-sectional area and/or the second cross-sectional area is smaller than 1 m² , in particular smaller than 1000 cm² and further in particular smaller than 100 cm², and/or wherein
the first cross-sectional area and/or the second cross-sectional area has/have
an oval shape and in particular a circular shape,
a triangular shape and in particular that of a right-angled triangle or
a quadrangular shape and
in particular a rectangular shape and furthermore in particular a square shape.

6. Heating system (100) according to one of the preceding claims, further comprising
at least one further coil (123), which has at least one complete winding within a further cross-sectional area, wherein the further cross-sectional area is different from both the first cross-sectional area and the second cross-sectional area.

7. Heating system (100) according to one of the preceding claims, wherein the coils (121, 122, 123) are electrically connected to each other in series and/or parallel.

8. Heating system (100) according to one of the preceding claims, wherein the coil arrangement (720) further comprises
at least one outer coil (726), which is arranged above the first coil (121) and/or above the second coil (122), wherein in particular
a cross-sectional area of the outer coil (726) is offset in a plane parallel to the plane of the first cross-sectional area and/or parallel to the plane of the second cross-sectional area with respect to the first cross-sectional area and/or with respect to the second cross-sectional area.

9. Heating system (100) according to one of the preceding claims, wherein the heating device (410) further comprises a capacitive element (430), which together with the coil arrangement (120) forms a resonant circuit.

10. Method for thermally connecting a pipe (150), which comprises a first plastic material, to a sleeve (160), which comprises a second plastic material and which surrounds at least a portion of the pipe (150), wherein an inductively heatable heating medium (170, 870a) is located between the pipe (150) and the sleeve (160) and/or integrated in the pipe (150) and/or the sleeve (160), the method comprising
applying a heating device (110) from the outside to the sleeve (160), which heating device (110) has a coil arrangement (120) which can be energized by a generator (140), wherein the coil arrangement (120) has a first coil (121) which has at least one complete winding within a first cross-sectional area and a second coil (122) which is electrically coupled to the first coil (121) and which has at least one complete turn within a second cross-sectional area, wherein the first cross-sectional area is different from the second cross-sectional area;
applying a clamping device (835) from the outside to the sleeve (160) so that it is subjected to a pressure that is at least approximately constant along its outer circumference;
energizing the coil assembly (120); and
removing the heating device (110) from the sleeve (160).

11. Method according to the preceding claim, further comprising, before applying the heating device (110),
axial joining of the pipe (850a) with a further pipe (850b) so that one end of the pipe (850a) and one end of the further pipe (850b) are opposite each other at the end face;
applying the heating medium (870a, 870b) at least partially circumferentially around the end of the pipe (870a) and the end of the further pipe (870b); and
overlapping the sleeve (160) around the applied heating means (870a, 870b); wherein in particular the two pipes are district heating pipes (850a, 850b), which in particular have
an outer tube made of plastic and an inner tube made of plastic or steel.

12. Method according to the preceding claim, wherein
the coil arrangement (120) is electrically designed and/or the coils of the coil arrangement (120) are energized in such a way that a current flow is completely prevented around the sleeve (160) along the full circumferential course around the sleeve (160), and/or wherein
the heating means (970c) has a band-like structure (972c) with a heating aid material (990) which can be heated inductively, wherein the heating aid material (990) is spatially distributed or arranged along the circumferential course in such a way that electrical conductivity is interrupted at at least one point along the full circumferential course around the tube (150).

13. Method according to one of the three preceding claims, wherein the heating medium comprises a ferromagnetic material (980) which can be heated inductively and which has a Curie temperature which is lower than 460°C, in particular lower than 400°C, further in particular lower than 300°C and still further in particular lower than 250°C.

14. Method according to one of the four preceding claims, wherein the first coil (121) and the second coil (122) are energized with a time offset to each other.

15. Method according to one of the five preceding claims, wherein the coil arrangement (120) is energized at a frequency between 100 Hz and 10 MHz, preferably between 1 kHz and 1 MHz and particularly preferably between 20 kHz and 300 kHz.

## Revendications

1. Système de chauffage (100) pour connecter thermiquement un tuyau (150), qui a un premier matériau plastique, à un manchon (160), qui a un deuxième matériau plastique et qui entoure au moins une section du tuyau (150), dans lequel un milieu chauffant inductible (170) est situé entre le tuyau (150) et le manchon (160) et/ou intégré dans le tuyau (150) et/ou le manchon (160), dans lequel le système de chauffage (100) comprend
le manchon (160) et
un dispositif de chauffage (110) avec un agencement de bobines (120) qui peut être alimenté par un générateur (140), le générateur (140) et un dispositif de serrage (835),
dans lequel l'agencement de bobines (120) comprend
une première bobine (121) ayant au moins un enroulement complet dans une première zone de section transversale, et
une deuxième bobine (122) couplée électriquement à la première bobine (121) et comportant au moins un enroulement complet dans une deuxième zone de section transversale, la première zone de section transversale étant différente de la deuxième zone de section transversale ;
**caractérisé en ce que**
le dispositif de serrage (835) est configuré pour être appliqué au manchon (160) depuis l'extérieur, de sorte que le manchon est soumis à une pression au moins approximativement constante le long de sa circonférence extérieure.

2. Système de chauffage (100) selon la revendication précédente, dans lequel la première zone de section transversale et la seconde zone de section transversale se chevauchent.

3. Système de chauffage (100) selon l'une des revendications précédentes, dans lequel les deux bobines (121, 122) sont reliées mécaniquement l'une à l'autre, en particulier dans lequel
les deux bobines (121, 122) sont reliées l'une à l'autre par une liaison mécanique souple et/ou ont elles-mêmes au moins une certaine capacité de flexion.

4. Système de chauffage (100) selon l'une des revendications précédentes, dans lequel les deux bobines (121, 122) sont couplées électriquement l'une à l'autre de telle sorte que, lorsque l'agencement de bobines (520) est alimenté, un premier champ magnétique généré par la première bobine (121) est antiparallèle à un second champ magnétique généré par la seconde bobine (122).

5. Système de chauffage (100) selon l'une des revendications précédentes, dans lequel la première surface de section transversale et/ou la seconde surface de section transversale est inférieure à 1 m² , en particulier inférieure à 1000 cm² et en particulier inférieure à 100 cm² , et/ou dans lequel
la première surface de section transversale et/ou la seconde surface de section transversale a/ont
une forme ovale et en particulier une forme circulaire,
une forme triangulaire et en particulier celle d'un triangle rectangle ou
une forme quadrangulaire et
en particulier une forme rectangulaire et, en outre, une forme carrée.

6. Système de chauffage (100) selon l'une des revendications précédentes, comprenant en outre
au moins une autre bobine (123), qui présente au moins un enroulement complet à l'intérieur d'une autre zone de section transversale, la zone de section transversale étant différente de la première et de la deuxième zone de section transversale.

7. Système de chauffage (100) selon l'une des revendications précédentes, dans lequel les bobines (121, 122, 123) sont connectées électriquement les unes aux autres en série et/ou en parallèle.

8. Système de chauffage (100) selon l'une des revendications précédentes, dans lequel le dispositif de bobines (720) comprend en outre
au moins une bobine extérieure (726), disposée au-dessus de la première bobine (121) et/ou de la deuxième bobine (122), dans laquelle en particulier une section transversale de la bobine extérieure (726) est décalée dans un plan parallèle au plan de la première section transversale et/ou parallèle au plan de la deuxième section transversale par rapport à la première section transversale et/ou par rapport à la deuxième section transversale.

9. Système de chauffage (100) selon l'une des revendications précédentes, dans lequel le dispositif de chauffage (410) comprend en outre un élément capacitif (430) qui, avec l'agencement de bobines (120), forme un circuit résonant.

10. Procédé pour connecter thermiquement un tuyau (150), qui comprend un premier matériau plastique, à un manchon (160), qui comprend un second matériau plastique et qui entoure au moins une partie du tuyau (150), dans lequel un moyen de chauffage inductif (170, 870a) est situé entre le tuyau (150) et le manchon (160) et/ou intégré dans le tuyau (150) et/ou le manchon (160), le procédé consistant à
appliquer un dispositif de chauffage (110) de l'extérieur au manchon (160), lequel dispositif de chauffage (110) a un agencement de bobines (120) qui peut être alimenté par un générateur (140), dans lequel l'agencement de bobines (120) a une première bobine (121) qui a au moins un enroulement complet dans une première zone de section transversale et une deuxième bobine (122) qui est électriquement couplée à la première bobine (121) et qui a au moins un tour complet dans une deuxième zone de section transversale, dans laquelle la première zone de section transversale est différente de la deuxième zone de section transversale ;
appliquer un dispositif de serrage (835) de l'extérieur au manchon (160) de manière à ce qu'il soit soumis à une pression au moins approximativement constante le long de sa circonférence extérieure ;
mettre sous tension l'ensemble de la bobine (120) ; et
retirer le dispositif de chauffage (110) du manchon (160).

11. Procédé selon la revendication précédente, comprenant en outre, avant l'application du dispositif de chauffage (110),
assembler axialement la conduite (850a) avec une autre conduite (850b) de manière à ce qu'une extrémité de la conduite (850a) et une extrémité de l'autre conduite (850b) soient opposées l'une à l'autre au niveau de la face frontale ;
appliquer le moyen de chauffage inductif (870a, 870b) au moins partiellement autour de l'extrémité de la conduite (870a) et de l'extrémité de l'autre conduite (870b) ; et
faire chevaucher le manchon (160) autour des moyens de chauffage appliqués (870a, 870b) ; dans lequel en particulier
les deux conduites sont des conduites de chauffage urbain (850a, 850b), qui ont notamment
un tube extérieur en plastique et un tube intérieur en plastique ou en acier.

12. Procédé selon la revendication précédente, dans lequel l'agencement de bobines (120) est conçu électriquement et/ou les bobines de l'agencement de bobines (120) sont alimentées de telle sorte qu'un flux de courant est complètement empêché autour du manchon (160) sur toute la circonférence autour du manchon (160), et/ou dans lequel le moyen de chauffage (970c) a une structure en forme de bande (972c) avec un matériau d'aide au chauffage (990) qui peut être chauffé par induction, dans lequel le matériau d'aide au chauffage (990) est spatialement réparti ou disposé le long du parcours circonférentiel de manière à ce que la conductivité électrique soit interrompue en au moins un point le long du parcours circonférentiel complet autour du tube (150).

13. Procédé selon l'une des trois revendications précédentes, dans lequel le moyen de chauffage comprend un matériau ferromagnétique (980) qui peut être chauffé par induction et qui a une température de Curie inférieure à 460°C, en particulier inférieure à 400°C, en particulier inférieure à 300°C et en particulier inférieure à 250°C.

14. Procédé selon l'une des quatre revendications précédentes, dans lequel la première bobine (121) et la deuxième bobine (122) sont alimentées avec un décalage temporel l'une par rapport à l'autre.

15. Procédé selon l'une des cinq revendications précédentes, dans lequel la bobine (120) est alimentée à une fréquence comprise entre 100 Hz et 10 MHz, de préférence entre 1 kHz et 1 MHz et, de préférence encore, entre 20 kHz et 300 kHz.
